# EUROPEAN PATENT SPECIFICATION

(11) **EP 1 544 052 B1**
(45) Date of publication and mention of the grant of the patent: **04.04.2018**
(21) Application number: 03791322.5
(22) Date of filing: 27.08.2003
(51) Int. Cl.: B60R 19/18, B60R 21/04, B60R 21/34

(54) **COLLISION ENERGY-ABSORBING STRUCTURE**
KOLLISIONSENERGIEABSORPTIONSKONSTRUKTION
STRUCTURE AMORTISSANT LE CHOC D'UNE COLLISION

(30) Priority: 27.08.2002 JP 2002247629; 27.09.2002 JP 2002284055; 06.11.2002 JP 2002322563
(43) Date of publication of application: 22.06.2005
(73) Proprietor: Kaneka Corporation, Osaka (JP)
(72) Inventor: YAMAGUCHI, Kenji, Takatsuki-shi, Osaka 569-0004 (JP); YAMAMOTO, Yoshihiro, Settsu-shi, Osaka 566-0055 (JP); KIGUCHI, Taro, Settsu-shi, Osaka 566-0072 (JP); SAMESHIMA, Masahiko, Settsu-shi, Osaka 566-0072 (JP); HAMAMOTO, Takashi, Settsue-shi, Osaka 566-0072 (JP)
(74) Representative: Vossius & Partner Patentanwälte Rechtsanwälte mbB
(86) International application number: PCT/JP2003/010821
(87) International publication number: WO 2004/020256

(56) References cited:
- EP-A1- 1 048 530
- WO-A1-98/26195
- GB-A- 1 426 265
- JP-A- 8 142 784
- JP-A- 11 129 840
- JP-A- 11 208 395
- JP-A- 2001 158 314
- JP-A- 2003 252 155
- JP-U- 2 054 754
- JP-Y2- 6 008 930
- US-A- 3 871 636
- US-A- 5 100 187
- US-A- 5 593 182

## Description

### Technical Field

The present invention relates to a vehicle impact energy absorbing member for a vehicle suitably usable in a bumper, a side door, a pillar, etc., and to a vehicle impact energy absorbing structure using the vehicle impact energy absorbing member.

### Background Art

Various vehicle energy absorbing structures have been proposed and put to practical use; for example, one in which an impact energy absorbing member is mounted inside a bumper facer to improve the pedestrian protection performance and one in which an impact energy absorbing member is mounted inside a trim such as a pillar trim or a side door trim on the vehicle compartment side to improve the passenger protection performance.

For instance, there have been proposed a vehicle bumper which is constructed in such a manner that an impact energy absorbing member formed of a foamed molded piece made of a polypropylene resin is provided between a bumper reinforcing member disposed in a front end portion of a vehicle and a bumper facer covering the bumper reinforcing member, and in which the impact energy absorbing member absorbs impact energy acting on the bumper by being compression-deformed (see, for example, Japanese Patent Laid-Open 2002-144989), and a vehicle bumper which is constructed in such a manner that a hollow portion in a bumper front portion is double-partitioned with front and rear partition walls, and a plurality of ribs projecting from one of the front and rear partition walls toward the other partition wall while being spaced apart from the same, and in which the front wall of the bumper is warped to absorb impact energy when the bumper collides against an obstacle comparatively weakly, and the ribs are buckled and deformed to absorb impact energy when the bumper strongly collides against an obstacle (see, for example, Japanese Utility Model Laid-Open 57-37051).

On the other hand, it is known that impact energy acting on a bumper can be efficiently absorbed by making such a setting that the impact force acting on an impact energy absorbing member is generally constant over the entire time period during which the impact energy is absorbed by the bumper (see, for example, Japanese Patent Laid-Open 2002-172987).

A pillar structure has also been proposed in which a cushioning member is disposed in a gap between a pillar trim and a pillar inner panel (see, for example, Japanese Patent Laid-Open 6-211088).Further, a side door structure has been proposed in which a pair of upper and lower projections projecting on the vehicle compartment side is formed on a door trim in correspondence with the breast and waist of a passenger in a seated state, and in which a cushioning member is disposed between the door trim and a door inner panel inside the projections (see, for example, Japanese Patent Laid-Open 8-67144).

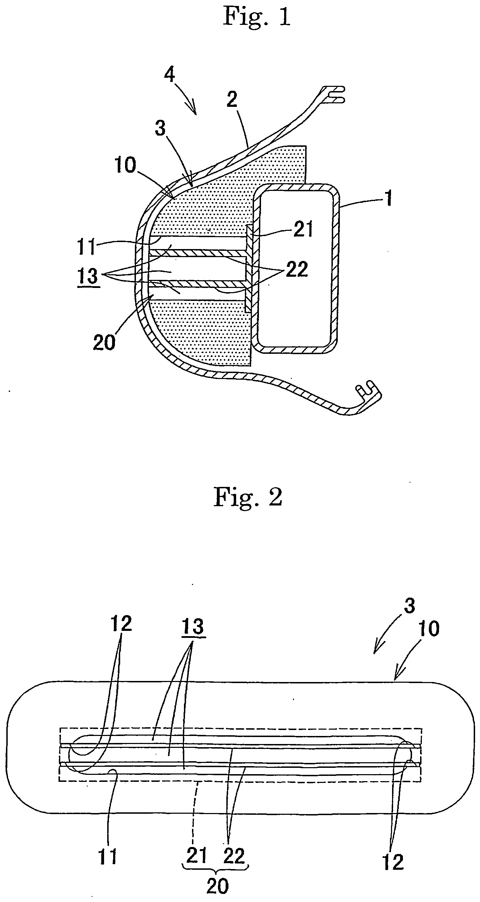

JP 6 008930 Y2 describes a structure that has an upper and lower pair of buckling portions formed in a manner that the buckling portion is bent into the shape of a crank at a portion between opposite ends thereof. Upon vehicle collision, a protruding portion of the buckling portion moves backward as shown by virtual lines in Fig. 1 of said document, so that an upper buckling portion is deformed into an approximately inverse S-shape, and the protruding portion is buckled and deformed into an approximately S-shape.

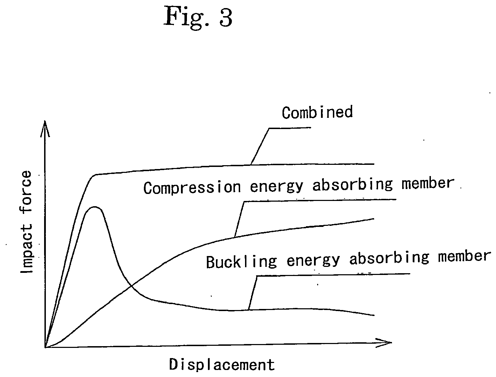

In the above-described conventional energy absorbing structures in bumpers and side doors, impact energy is absorbed basically by compression deformation of the foamed molded piece or buckling deformation of the ribs. As shown in Figure 3, the impact force acting on the compression energy absorbing member has a tendency to increase with the increase in the displacement of the compression energy absorbing member, and the impact force acting on the buckling energy absorbing member increases abruptly to a peak value in an initial stage of action of the impact force and has a tendency to decrease abruptly after passing the peak. Therefore, there is a problem that if the peak of the impact force is set to a lower value to improve the pedestrian or passenger safety performance, impact energy cannot be sufficiently absorbed in the compression energy absorbing member in an initial stage of impact energy absorption, or impact energy cannot be sufficiently absorbed in the buckling energy absorbing portion during a latter stage of impact energy absorption after the impact force has reached the peak value. The amount of absorption of impact energy can be increased if the amount of displacement of the energy absorbing member is increased. In the case of use in a vehicle such as a motor vehicle, however, it is necessary to dispose the energy absorbing member in a restricted space and it is, therefore, difficult to sufficiently absorb impact energy while limiting the impact force.

An object of the present invention is to provide a vehicle impact energy absorbing member which is arranged as an impact energy absorbing member of a simple construction capable of absorbing impact energy with high efficiency, and which is capable of improving the pedestrian protection performance as well as the passenger protection performance, and a vehicle impact energy absorbing structure using the vehicle impact energy absorbing member.

### Disclosure of the Invention

The invention is defined in the claims.

As shown in Figure 3, an impact force acting on an compression energy absorbing member has a tendency to increase with the increase in the displacement of the compression energy absorbing member, and an impact force acting on a buckling energy absorbing member increases abruptly to a peak value in an initial stage of action of the impact force and has a tendency to decrease abruptly after passing the peak. On the other hand, there is a need to make a setting for avoiding an excessive increase in impact force on a pedestrian or a passenger for the purpose of improving the pedestrian and passenger protection performance. The inventors of the present invention have eagerly studied the constructions of vehicle impact energy absorbing members capable of improving the pedestrian and passenger protection performance to conceive the idea that if the impact energy absorption characteristics of a compression energy absorbing member and a buckling energy absorbing member are combined, a vehicle impact energy absorbing member can be realized which can maintain an impact force acting on the vehicle impact energy absorbing member at a target value at which a pedestrian or a passenger can be protected over the entire length of a time period during which impact energy is absorbed by the vehicle impact energy absorbing member and can absorb a maximized amount of impact energy while ensuring the desired pedestrian and passenger protection performance, and have completed the present invention. The impact energy absorbing member in accordance with the present invention has a compression energy absorbing member using compression deformation and a buckling energy absorbing member using buckling deformation. Impact energy applied to a vehicle body is absorbed by a combination of the two energy absorbing members.

As described above, an impact force acting on the compression energy absorbing member has a tendency to increase with the increase in the displacement of the compression energy absorbing member, and an impact force acting on the buckling energy absorbing member increases abruptly to a peak value in an initial stage of action of the impact force and has a tendency to decrease abruptly after passing the peak. In this vehicle impact energy absorbing member, since impact energy is absorbed by the combination of the compression energy absorbing member and the buckling energy absorbing member, the impact force on the vehicle impact energy absorbing member can be maintained generally constantly over the entire length of the time period during which impact energy is absorbed by the vehicle impact energy absorbing member. Therefore, if the impact force on the vehicle impact energy absorbing member is set to a target value at which a pedestrian and a passenger can be protected, it is possible to absorb a maximized amount of impact energy while ensuring the desired pedestrian and passenger protection performance by limiting the impact force.

The compression energy absorbing member and the buckling energy absorbing member may start energy absorbing deformation under the impact force by substantially the same timing or may start energy absorbing deformation under the impact force by different timings. In the former case, impact energy can be absorbed by making full use of the space for disposition of the vehicle impact energy absorbing member capable of being mounted on a vehicle. In the latter case, an optimum energy absorbing characteristic of the entire combination of the compression energy absorbing member and the buckling energy absorbing member can be realized by adjusting the timing for starting energy absorbing deformation of the compression energy absorbing member and the buckling energy absorbing member. It is preferable to make a setting such that the impact force on the two energy absorbing members is generally constant over the entire length of the time period during which the impact energy is absorbed by the two energy absorbing members. If such a setting for making the impact force on the two energy absorbing members generally constant over the entire length of the impact energy absorption time period is made, it is possible to efficiently absorb impact energy by effectively utilizing the entire impact energy absorption period while reducing the impact force acting on a pedestrian. The compression energy absorbing member may be disposed so as to be compression-deformed over the entire length of the impact energy absorption time period, and the buckling energy absorbing member may be disposed so as to be buckled and deformed in an initial stage in the impact energy absorption time period. The impact force in the compression impact member increases with the passage of time to the end of the impact energy absorption time period, and the impact force in the buckling energy absorbing member is large when the buckling energy absorbing member buckles, and is small in other states. In the present invention, the buckling energy absorbing member is buckled and deformed to absorb the impact force in an initial state in the impact energy absorption time period, and the impact force on the compression energy absorbing member becomes larger in a latter stage in the impact energy absorption time period. The impact energy absorbing effects of the two energy absorbing members are combined to absorb impact energy at an impact force generally constant over the entire length of the impact energy absorption time period while reducing the impact force on a pedestrian, thus enabling efficient absorption of impact energy by effectively utilizing the entire impact energy absorption time period.

The compression energy absorbing member is constituted by a foamed molded piece made of a synthetic resin, and the foaming expansion ratio of the foamed molded piece forming the compression energy absorbing member may be set to 2 to 150. This arrangement enables realization of the desired impact energy absorption characteristic by adjustment of the foaming expansion ratio while ensuring the desired energy absorption performance, and enables the vehicle impact energy absorbing member to be constructed so as to be light in weight.

The buckling energy absorbing member is constituted by a solid member made of a synthetic resin material. In this case, it is preferable to constitute the buckling energy absorbing member by a foamed molded piece made of a synthetic resin material and to set the foaming expansion ratio of the foamed molded piece forming the buckling energy absorbing member to 20 or less. This arrangement enables the compression energy absorbing member and the buckling energy absorbing member to be formed integrally with each other while ensuring the desired impact energy absorption performance, has the effect of reducing the number of assembly steps, and enables the vehicle bumper impact energy absorbing member to be constructed so as to be light in weight.

Buckling allowance spaces such as those indicated by a reference numeral 13 in Figures 1 and 2 for example is provided on opposite sides of the buckling energy absorbing member in the vertical direction. In this case, the buckling energy absorbing member can be buckled and deformed in the buckling allowance spaces.

The buckling energy absorbing member may be formed integrally with the compression energy absorbing member by insert molding. In this case, the buckling energy absorbing member is made in advance and set in a mold and the compression energy absorbing member is insert molded. Although the molding process is somewhat complicated, the strength of mounting of the buckling energy absorbing member on the compression energy absorbing member can be improved and the number of vehicle assembly steps in a post process can be reduced.

The buckling energy absorbing member and the compression energy absorbing member may be separately formed and combined integrally with each other. In this case, the number of component parts is increased but the facility with which the compression energy absorbing member is formed can be improved and the two energy absorbing members can be firmly combined integrally with each other by an adhesive or the like.

A core member for a vehicle bumper can be formed by using the vehicle impact energy absorbing member. In this case, if the impact force on the vehicle impact energy absorbing member is set to a target value at which a pedestrian can be protected, it is possible to absorb a maximized amount of impact energy while ensuring the desired pedestrian protection performance at the time of contact with the bumper.

It is also preferable to provide the buckling energy absorbing member through the entire width of the bumper in the front-rear direction. In this case, an impact load can be caused to act on the buckling energy absorbing member from an initial state of collision and impact energy in the initial stage of collision can be effectively absorbed by the buckling energy absorbing member.

The buckling energy absorbing member is constituted by a member in the form of a plate made of a synthetic resin material and may be provided in a substantially horizontal plane along the lengthwise direction of the bumper and through the entire width of the bumper in the front-rear direction.

The buckling energy absorbing member may be provided integrally with a bumper facer, and an assembly space for accommodating the buckling energy absorbing member is formed in the compression energy absorbing member. This arrangement is preferred because the number of component parts constituting the core can be reduced.

A first vehicle impact energy absorbing structure in accordance with the present invention has the vehicle impact energy absorbing member according to any one of claims 1 to 7,
the vehicle impact energy absorbing member being provided in a space between a bumper reinforcing member provided in a front end portion of a vehicle along the vehicle width direction and a bumper facer covering the bumper reinforcing member. In a bumper constructed in this manner, if the impact force on the vehicle impact energy absorbing member is set to a target value at which a pedestrian can be protected, it is possible to absorb a maximized amount of impact energy while ensuring the desired pedestrian protection performance at the time of contact with the bumper.

A second vehicle impact energy absorbing structure in accordance with the present invention has the vehicle impact energy absorbing member according to any one of claims 1 to 7, the vehicle impact energy absorbing member being provided in a space between a door inner panel and a door trim. In a door constructed in this manner, if the impact force on the vehicle impact energy absorbing member is set to a target value at which a pedestrian can be protected, it is possible to absorb a maximized amount of impact energy while ensuring the desired pedestrian protection at the time of contact with the door.

A third vehicle impact energy absorbing structure in accordance with the present invention has the vehicle impact energy absorbing member according to any one of claims 1 to 7, the vehicle impact energy absorbing member being provided in a space between a pillar inner panel and a pillar trim. In a pillar constructed in this manner, if the impact force on the vehicle impact energy absorbing member is set to a target value at which a pedestrian can be protected, it is possible to absorb a maximized amount of impact energy while ensuring the desired pedestrian protection at the time of contact with the pillar.

### Brief Description of the Drawings

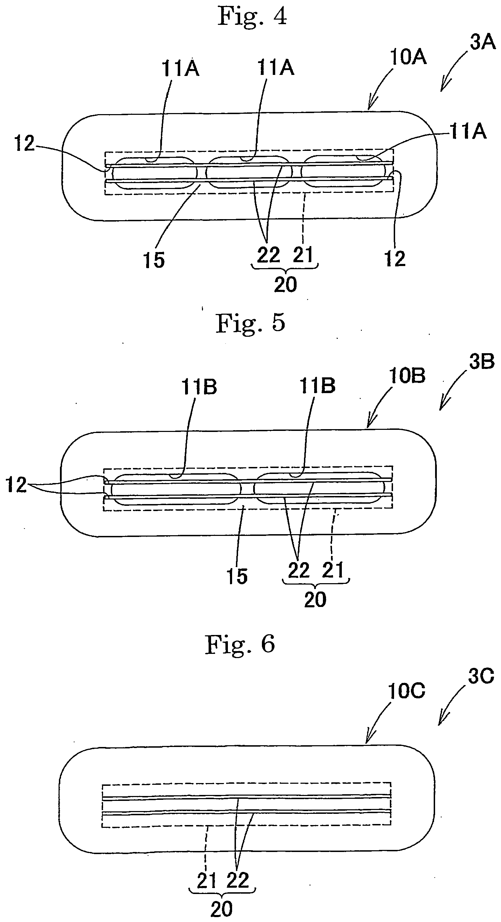

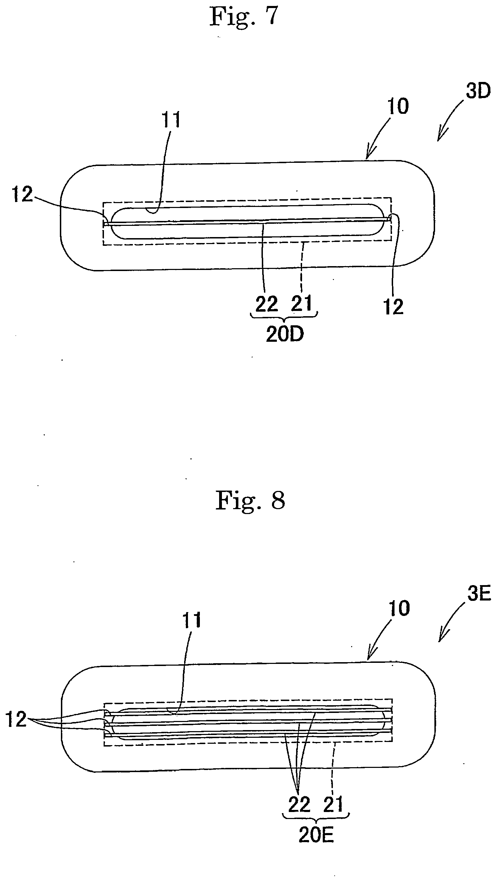

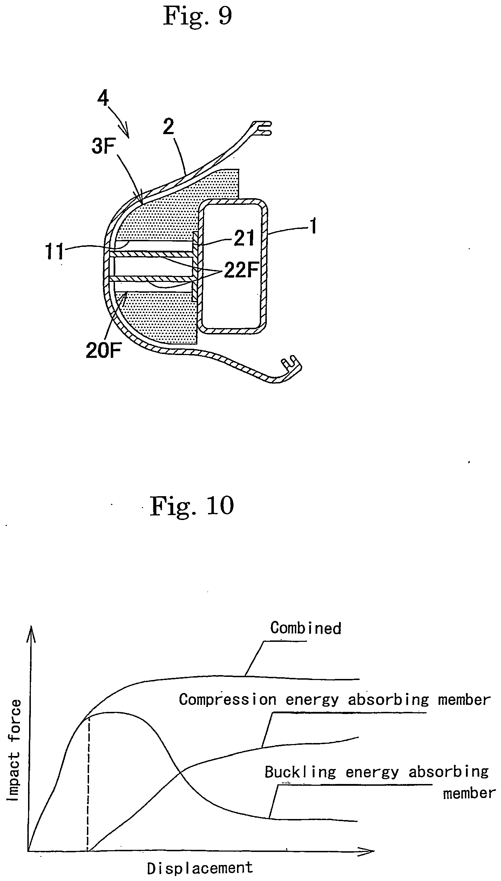

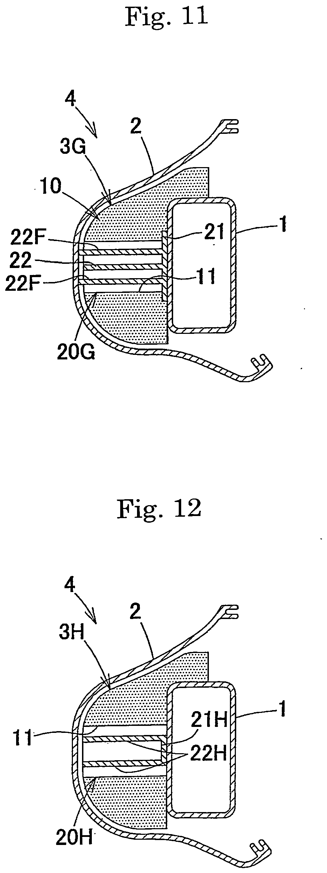

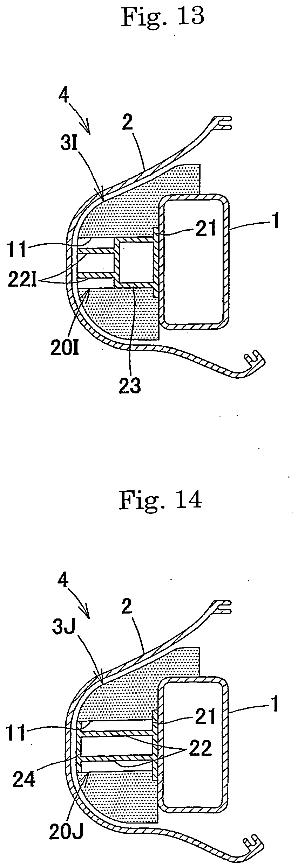

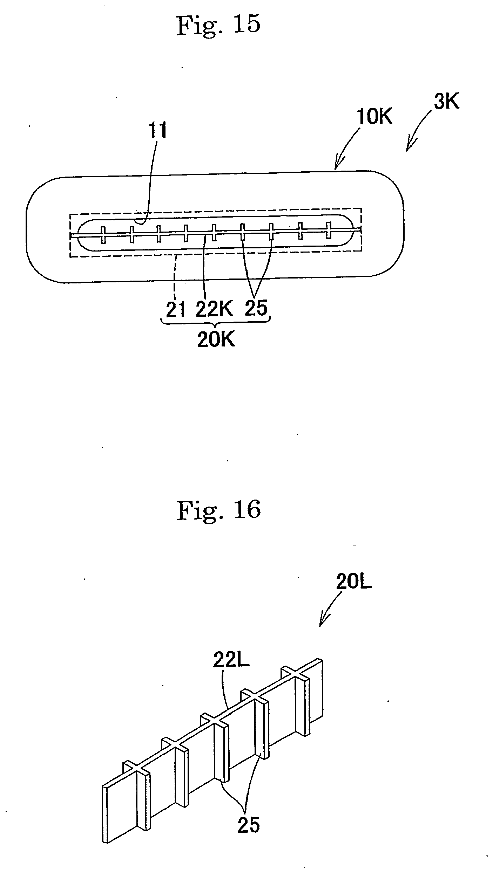

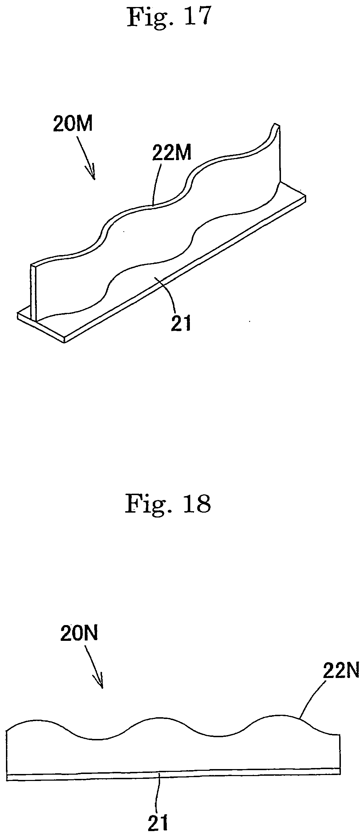

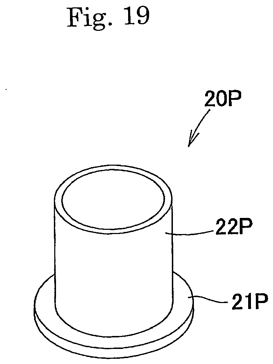

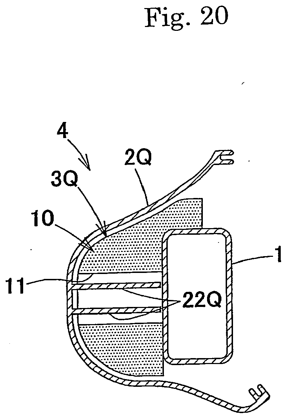

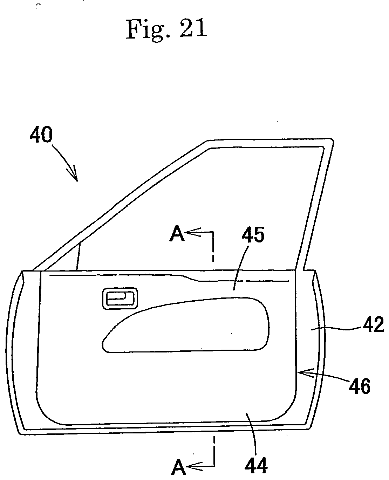

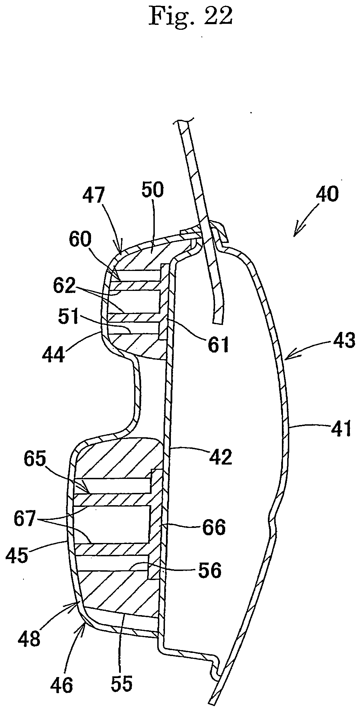

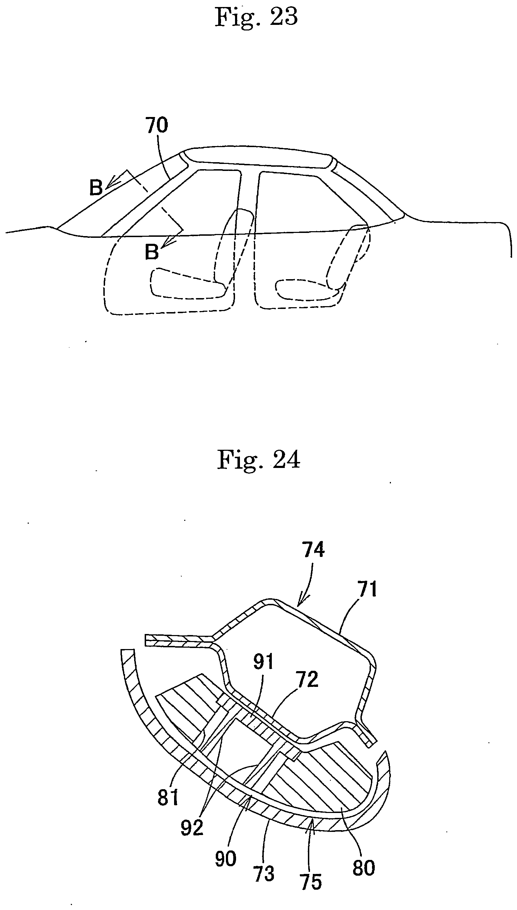

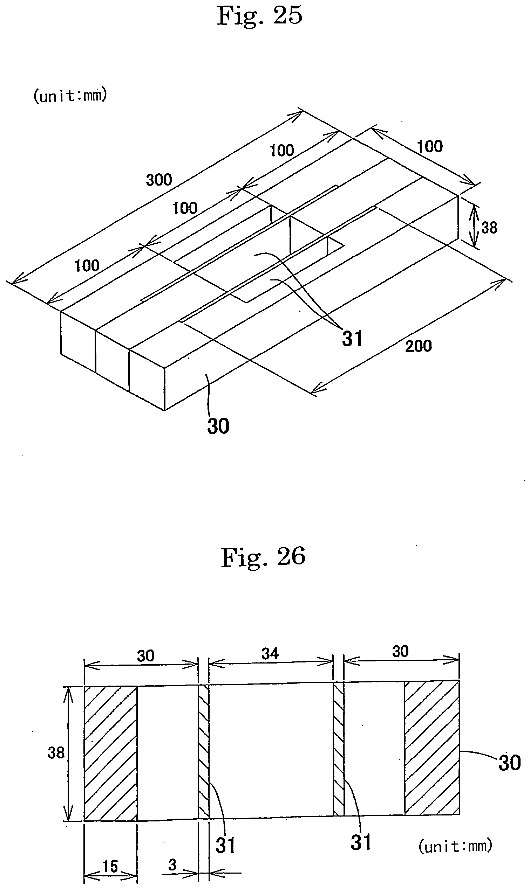

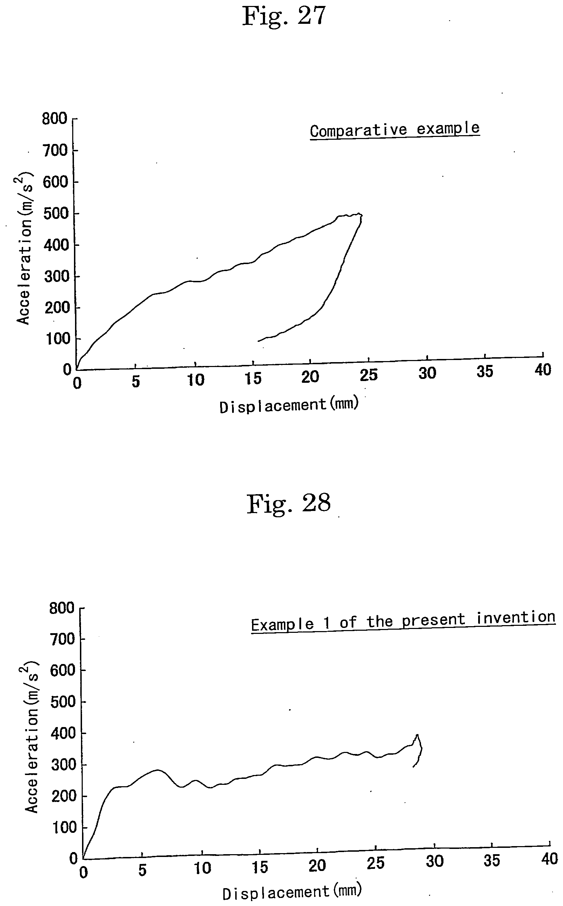

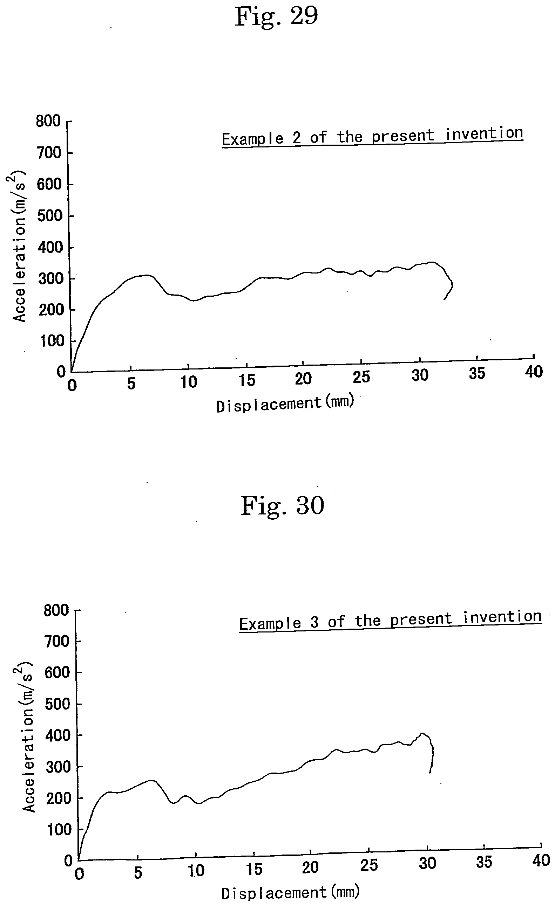

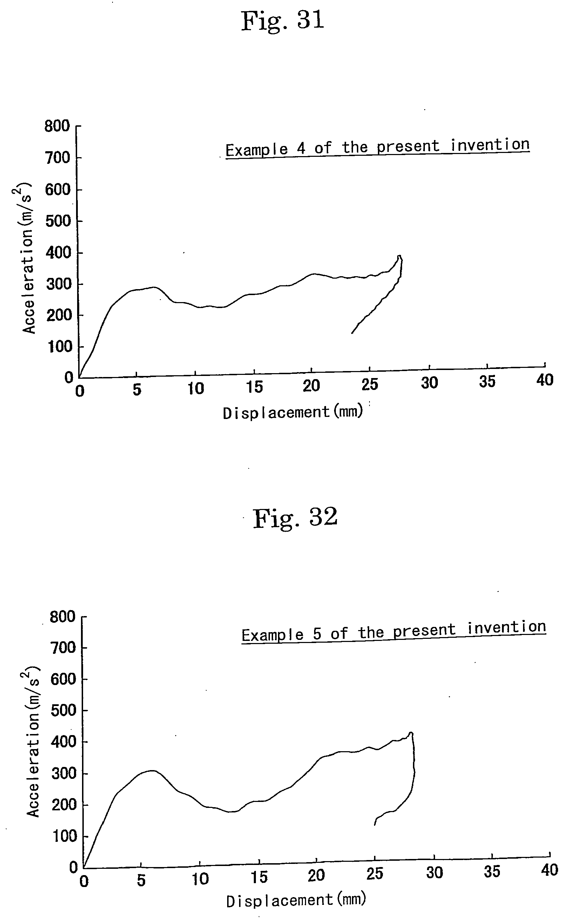

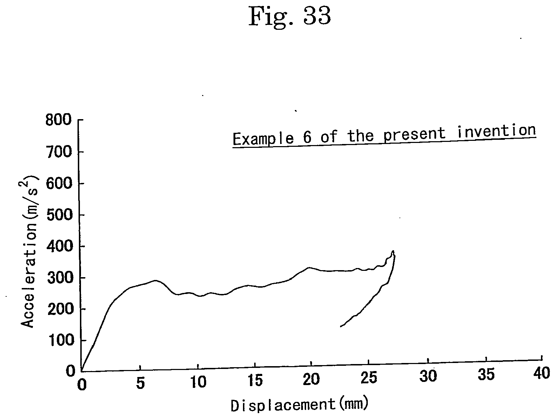

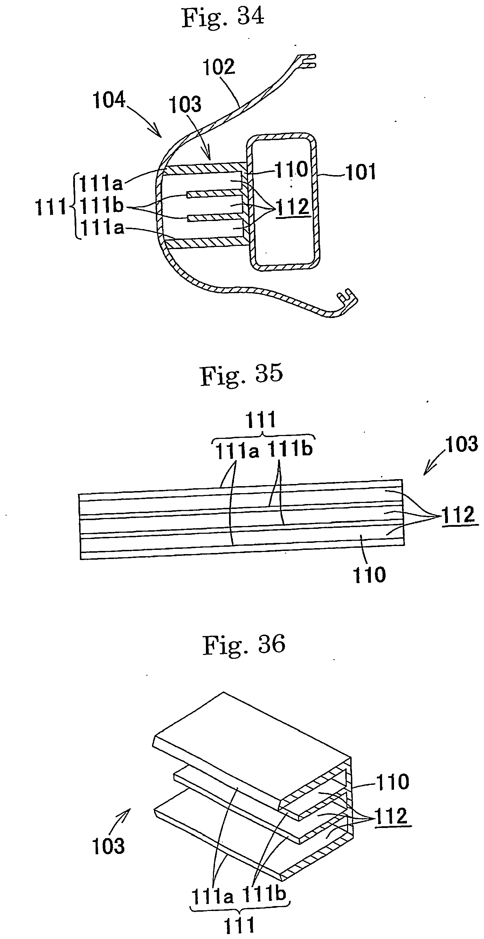

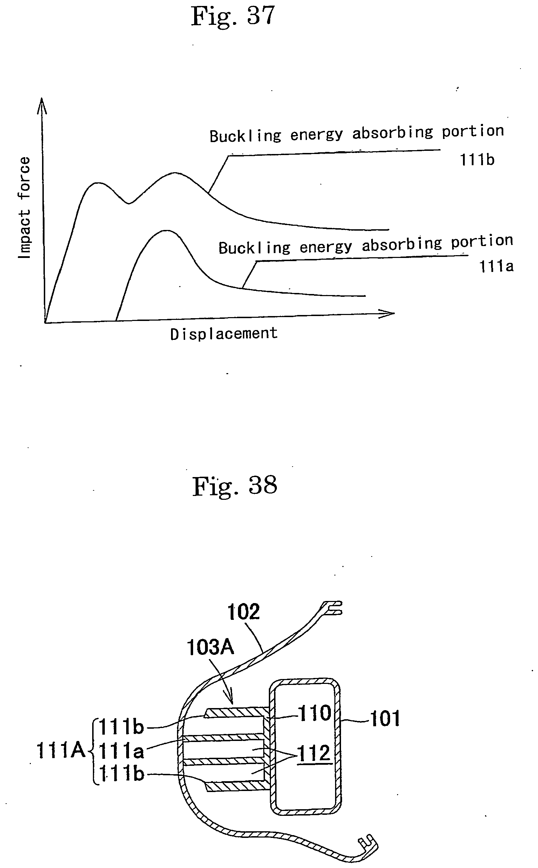

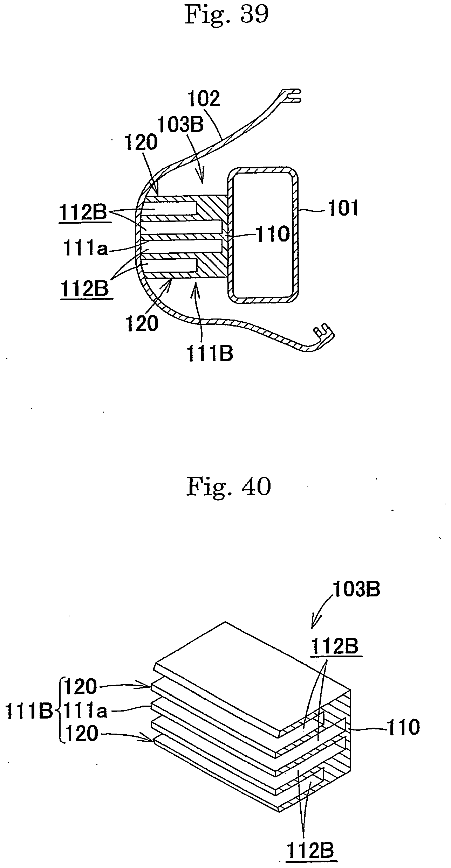

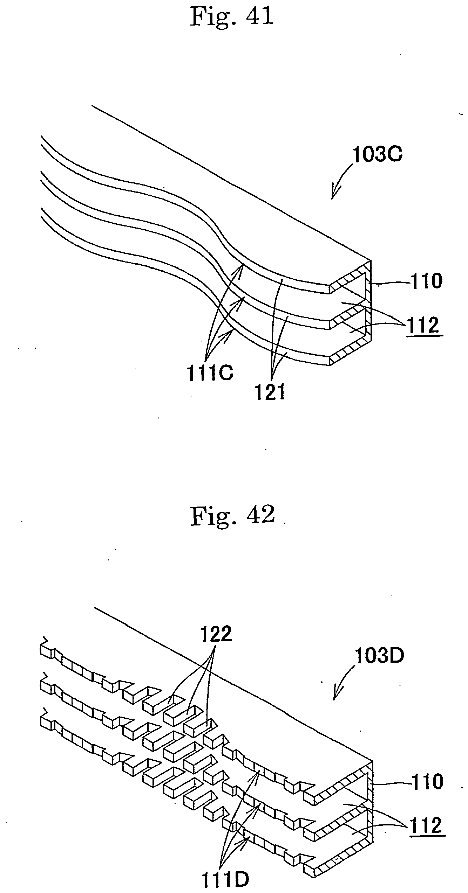

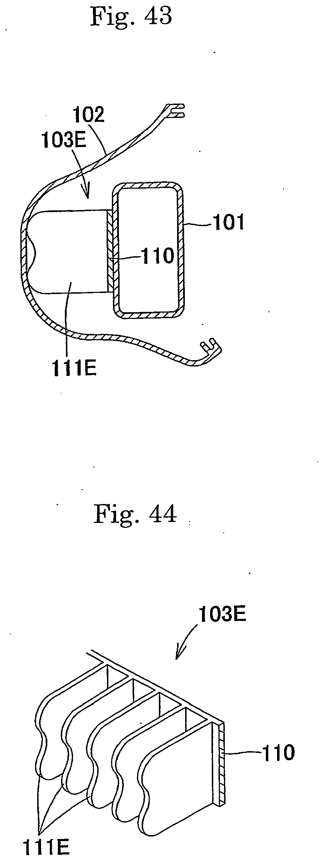

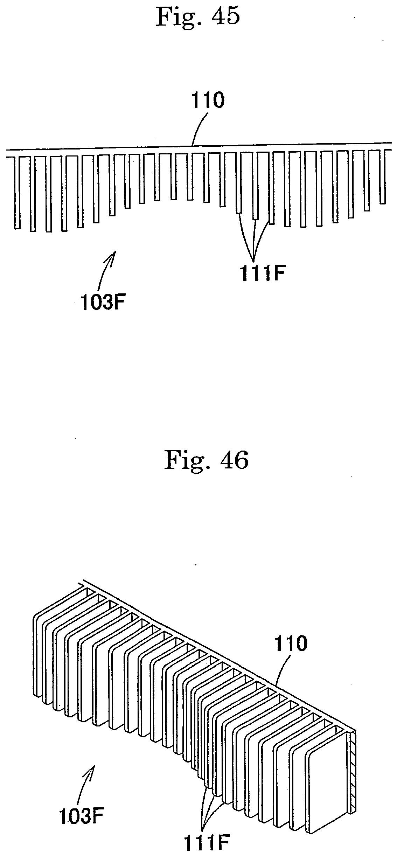

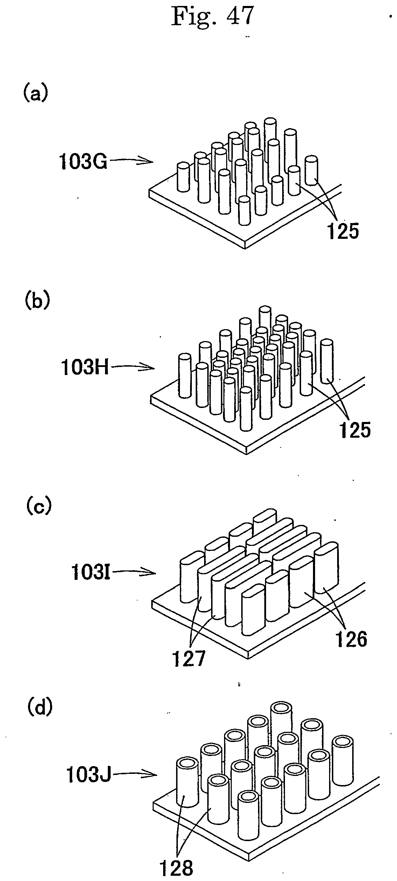

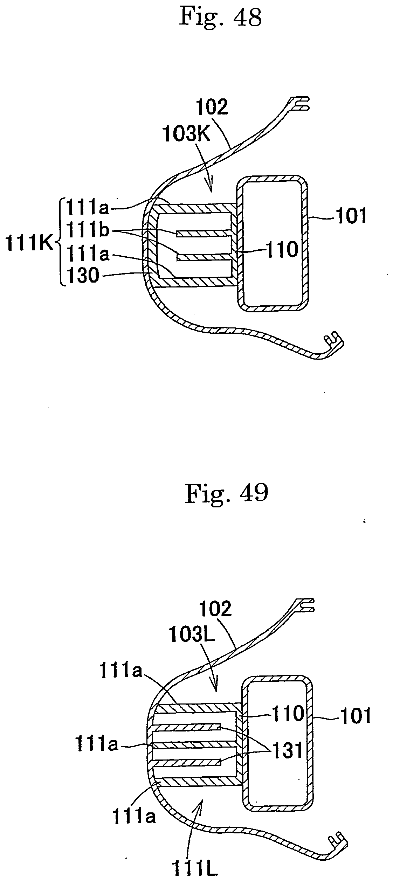

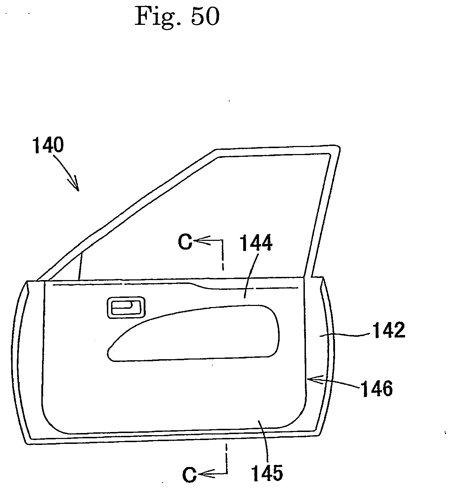

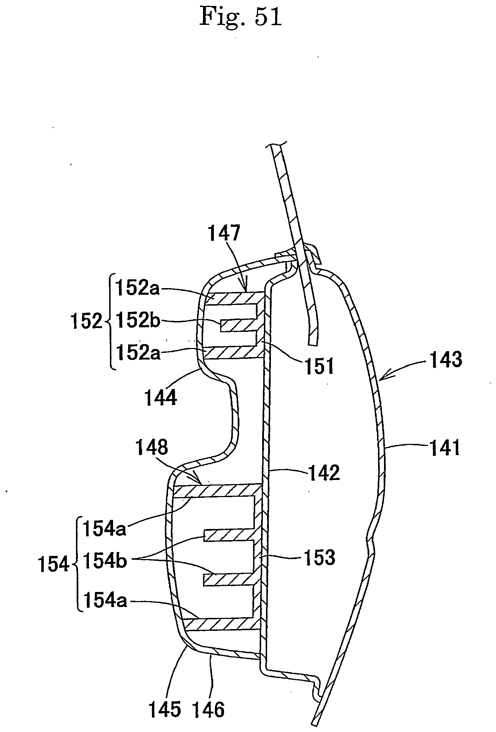

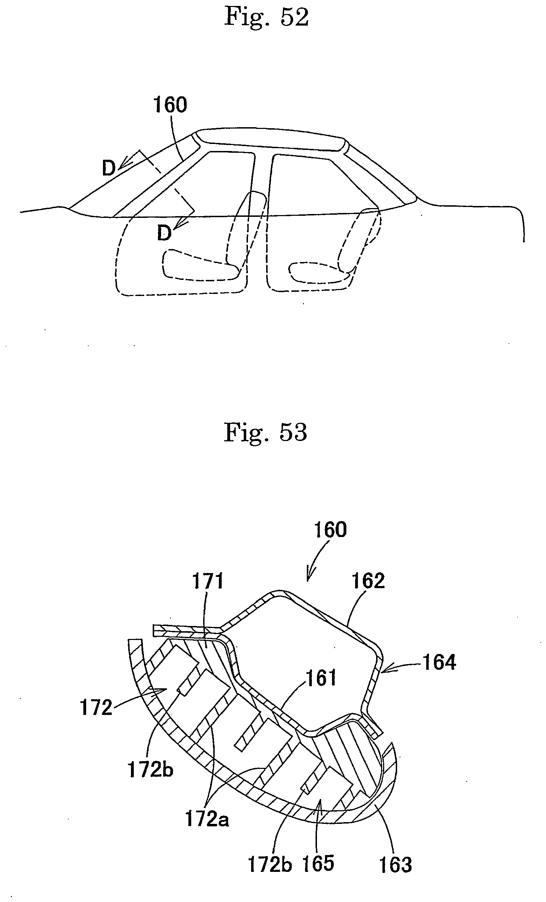

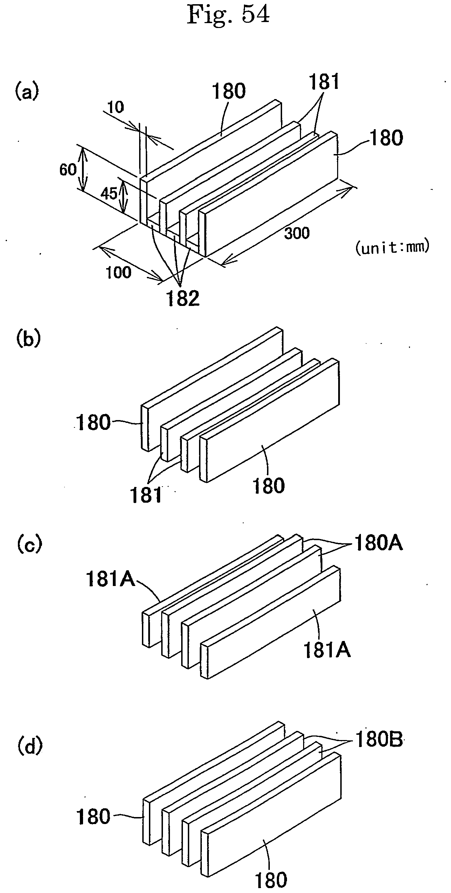

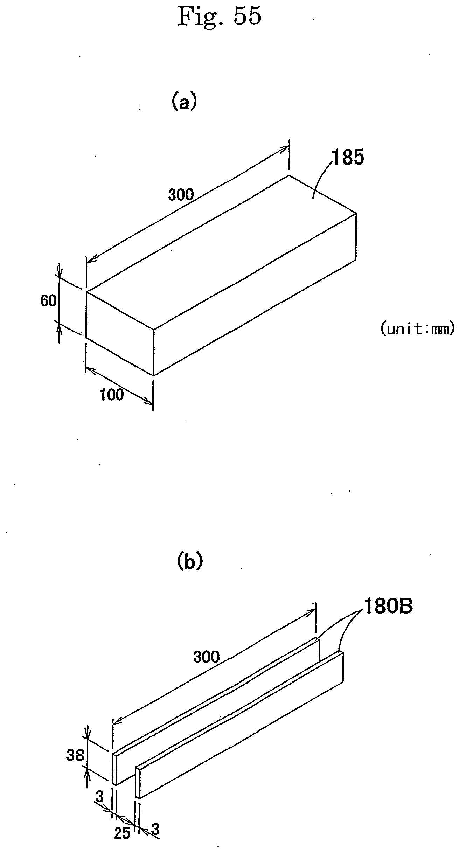

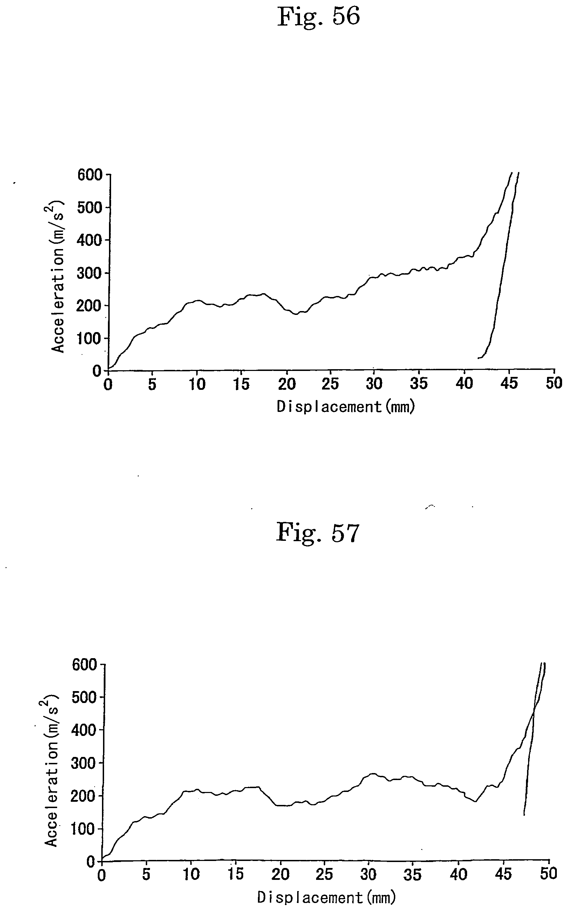

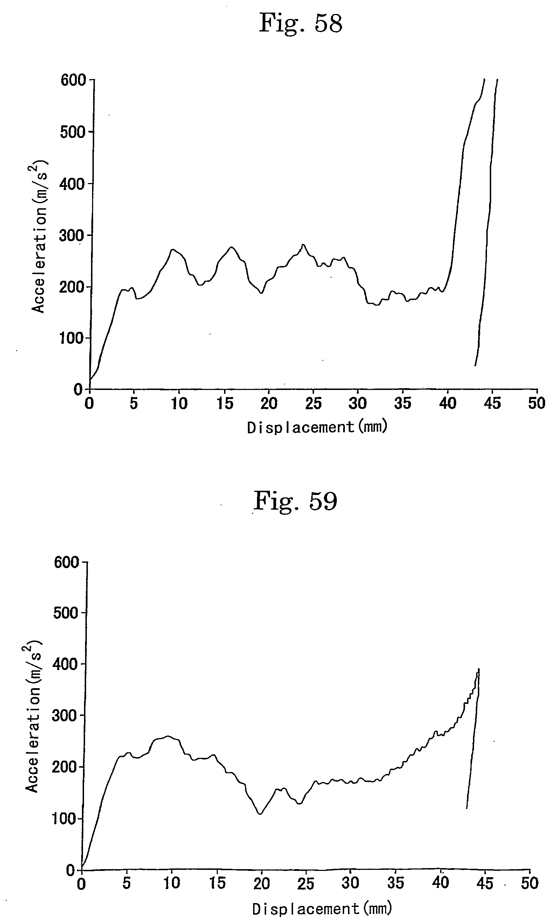

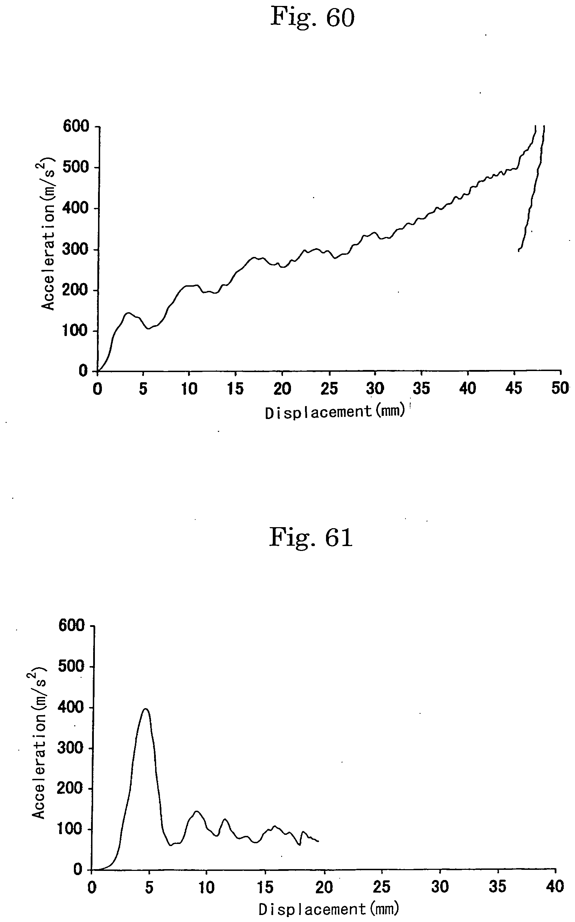

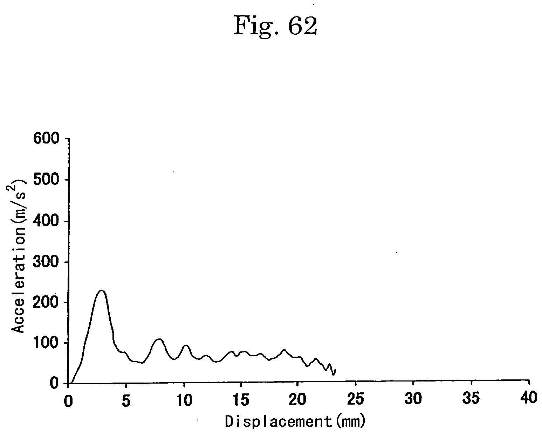

Figure 1 is a longitudinal sectional view of a front bumper to which a first vehicle impact energy absorbing member is applied; Figure 2 is a front view of the impact energy absorbing member; Figure 3 is a graph showing the relationship between displacement and impact force; Figure 4 is a front view of an impact energy absorbing member of another construction; Figure 5 is a front view of an impact energy absorbing member of another construction; Figure 6 is a front view of an impact energy absorbing member of another construction; Figure 7 is a front view of an impact energy absorbing member of another construction; Figure 8 is a front view of an impact energy absorbing member of another construction; Figure 9 is a longitudinal sectional view of a front bumper to which an impact energy absorbing member of another construction is applied; Figure 10 is a graph showing the relationship between displacement and impact force in a case where the construction of the impact energy absorbing member is changed; Figure 11 is a longitudinal sectional view of a front bumper to which an impact energy absorbing member of another construction is applied; Figure 12 is a longitudinal sectional view of a front bumper to which an impact energy absorbing member of another construction is applied; Figure 13 is a longitudinal sectional view of a front bumper to which an impact energy absorbing member of another construction is applied; Figure 14 is a longitudinal sectional view of a front bumper to which an impact energy absorbing member of another construction is applied; Figure 15 is a front view of an impact energy absorbing member of another construction; Figure 16 is a perspective view of a buckling energy absorbing member of another construction; Figure 17 is a perspective view of a buckling energy absorbing member of another construction; Figure 18 is a plan view of a buckling energy absorbing member of another construction; Figure 19 is a perspective view of a buckling energy absorbing member of another construction; Figure 20 is a longitudinal sectional view of a front bumper to which an impact energy absorbing member of another construction is applied; Figure 21 is a side view of a front side door to which the first vehicle impact energy absorbing member is applied, the front side door being seen from the compartment side; Figure 22 is a cross-sectional view taken along the line A-A in Figure 21; Figure 23 is a side view of an essential portion of a vehicle having a pillar to which the first vehicle impact energy absorbing member is applied; Figure 24 is a cross-sectional view taken along the line B-B in Figure 23; Figure 25 is a perspective view of a test piece used in an evaluation test; Figure 26 is a longitudinal sectional view of the test piece; Figure 27 is a graph showing the relationship between displacement and acceleration in a comparative example; Figure 28 is a graph showing the relationship between displacement and acceleration in example 1 of the present invention; Figure 29 is a graph showing the relationship between displacement and acceleration in example 2 of the present invention; Figure 30 is a graph showing the relationship between displacement and acceleration in example 3 of the present invention; Figure 31 is a graph showing the relationship between displacement and acceleration in example 4 of the present invention; Figure 32 is a graph showing the relationship between displacement and acceleration in example 5 of the present invention; Figure 33 is a graph showing the relationship between displacement and acceleration in example 6 of the present invention; Figure 34 is a longitudinal sectional view of a front bumper to which a second vehicle impact energy absorbing member is applied; Figure 35 is a front view of the vehicle impact energy absorbing member; Figure 36 is a perspective view of an essential portion of the vehicle impact energy absorbing member; Figure 37 is a graph showing the relationship between displacement and impact force; Figure 38 is a longitudinal sectional view of a front bumper to which an impact energy absorbing member of another construction is applied; Figure 39 is a longitudinal sectional view of a front bumper to which an impact energy absorbing member of another construction is applied; Figure 40 is a perspective view of an essential portion of an impact energy absorbing member used in the front bumper; Figure 41 is a perspective view of an essential portion of a front bumper to which an impact energy absorbing member of another construction is applied; Figure 42 is a perspective view of an essential portion of a front bumper to which an impact energy absorbing member of another construction is applied; Figure 43 is a longitudinal sectional view of a front bumper to which an impact energy absorbing member of another construction is applied; Figure 44 is a perspective view of an essential portion of a vehicle impact energy absorbing member used in the front bumper; Figure 45 is a plan view of an impact energy absorbing member of another construction; Figure 46 is a perspective view of an essential portion of the impact energy absorbing member; Figures 47(a) through 47(d) are perspective views of essential portions of impact energy absorbing members of other constructions; Figure 48 is a longitudinal sectional view of a front bumper to which an impact energy absorbing member of another construction is applied; Figure 49 is a longitudinal sectional view of a front bumper to which an impact energy absorbing member of another construction is applied; Figure 50 is a side view of a front side door to which the second vehicle impact energy absorbing member is applied, the front side door being seen from the compartment side; Figure 51 is a cross-sectional view taken along the line C-C in Figure 50; Figure 52 is a side view of an essential portion of a vehicle having a pillar to which the second vehicle impact energy absorbing member is applied; Figure 53 is a cross-sectional view taken along the line D-D in Figure 52; Figures 54(a) through 54(d) are perspective views of test pieces in examples of the present invention used in an evaluation test; Figures 55(a) and 55(b) are perspective views of test pieces in comparative examples used in the evaluation test; Figure 56 is a graph showing the relationship between displacement and acceleration in example 11 of the present invention; Figure 57 is a graph showing the relationship between displacement and acceleration in example 12 of the present invention; Figure 58 is a graph showing the relationship between displacement and acceleration in example 13 of the present invention; Figure 59 is a graph showing the relationship between displacement and acceleration in example 14 of the present invention; Figure 60 is a graph showing the relationship between displacement and acceleration in comparative example 11; Figure 61 is a graph showing the relationship between displacement and acceleration in comparative example 12; and Figure 62 is a graph showing the relationship between displacement and acceleration in comparative example 13.

### Best Mode for Carrying Out the Invention

Embodiments of the present invention will be described below with reference to the drawings.(First Embodiment)

In this first embodiment, a first vehicle impact energy absorbing member in accordance with the present invention is applied to a bumper of a motor vehicle.

As shown in Figure 1, a bumper reinforcing member 1 extending in the vehicle width direction is provided in a front end portion of a vehicle body; a bumper facer 2 of a well-known construction made of a synthetic resin material or a metallic material is provided on the front side of the bumper reinforcing member 1 so as to cover the same; and a first impact energy absorbing member 3 is mounted as a bumper core member between the bumper reinforcing member 1 and the bumper facer 2.

A front bumper 4 is constituted by the bumper facer 2 and the impact energy absorbing member 3. An impact load at the time of front-on collision is transferred to the impact energy absorbing member 3 through the bumper facer 2 and is received by these two members while these members are being deformed by the impact load. When a larger impact load acts on the bumper, the impact load acts on the bumper reinforcing member 1 to be received by the bumper reinforcing member 1 while the bumper reinforcing member 1 is being deformed by the impact load. The impact energy absorbing structure in accordance with the present invention can also be applied to a rear bumper in the same manner. The impact energy absorbing member 3 has, as shown in Figures 1 and 2, a compression energy absorbing member 10 formed of a synthetic resin foamed molded piece and a buckling energy absorbing member 20 formed of a synthetic resin molded piece. Impact energy acting on the impact energy absorbing member 3 is absorbed by compression deformation of the compression energy absorbing member 10 substantially over the entire length of the impact energy absorption time period, and by buckling deformation of the buckling energy absorbing member 20 about an initial stage in the impact energy absorption period.

The compression energy absorbing member 10 is formed into a shape corresponding to the space between the bumper reinforcing member 1 and the bumper facer 2 and is fitted in the space without a substantial gap therebetween. The compression energy absorbing member 10 is disposed on the front side of the bumper reinforcing member 1 so as to be compression-deformable substantially over the entire length of the impact energy absorption time period. One opening 11 elongated in the vehicle width direction is formed in the compression energy absorbing member 10 in correspondence with a portion of the compression energy absorbing member 10 at an intermediate position in the height direction so that its ends in the vehicle width directions are close to the opposite ends of the compression energy absorbing member 10.

The buckling energy absorbing member 20 is a member Π-shaped in section and made of a synthetic resin. The buckling energy absorbing member 20 has a fixation portion 21 in the form of an elongated generally-flat plate and a pair of buckling portions 22 each in the form of an elongated generally-flat plate substantially equal in length to the fixation portion 21. The pair of buckling portions 22 is fixed on an intermediate portion of the fixation portion 21 perpendicularly to the same while being spaced apart from each other. The fixation portion 21, which is a member for fixing the buckling portions 22 at a predetermined placement position, may be removed since it does not directly influence impact energy absorption characteristics.

The fixation portion 21 is formed so as to have an external shape larger than the opening 11 of the compression energy absorbing member 10, and is attached to a rear surface of the compression energy absorbing member 10 so as to close the rear side of the opening 11. In a state where the fixation portion 21 is mounted in front of the bumper reinforcing member 1 together with the bumper facer 2 and the compression energy absorbing member 10, outer peripheral portion of the fixation portion 21 is pinched between the compression energy absorbing member 10 and the bumper reinforcing member 1.

Opposite ends of the buckling portions 22 are fixed to the compression energy absorbing member 10 by being fitted in fixation grooves 12 in the compression energy absorbing member 10, and tip ends of the buckling portions 22 are placed in vicinity of the bumper facer 2 by being passed through the opening 11 of the compression energy absorbing member 10 to enable the buckling portions 22 to be buckled and deformed in an initial stage in the impact energy absorption time period. Buckling allowance spaces 13 are formed between the inner wall surface of the opening 11 of the compression energy absorbing member 10 and the buckling portions 22 and between the upper and lower buckling portions 22 according to such a setting that no mutual interference occurs between the inner wall surface of the compression energy absorbing member 10 and the buckling portions 22 and between the buckling portions 22 when the buckling portions 22 buckle,
thereby ensuring that buckling deformation of the buckling portions 22 are effected smoothly and reliably. The buckling allowance spaces 13 may be formed in the form of through holes through the entire width of the bumper in the front-rear direction. Alternatively, the buckling allowance spaces 13 may be provided in the form of holes opened in the frontward direction but closed at their bottoms. In such a case, the depth of the holes is set to 1/3 or more of the entire width of the bumper in the front-rear direction. Further, it is preferable to set each of the spacing between the buckling portions 22 and the spacing between the buckling portions 22 and the compression energy absorbing member 10 as seen in Figure 1 to 1/3 or more of the entire the entire width of the bumper in the front-rear direction in order to ensure that buckling deformation of the buckling portions 22 are effected smoothly and reliably.

As the compression energy absorbing member 10, a synthetic resin material, a synthetic rubber material or the like can be used if it is capable of absorbing an impact load by compression deformation. For example, a foamed molded piece made of a polystyrene resin, a polyolefin resin such as a polyethylene resin or a polypropylene, a copolymer of such synthetic resin, or the like can be suitably used.

In a case where such a foamed molded piece is formed by a bead method, a polyolefin resin, e.g., an ethylene-propylene random polypropylene resin, an ethylene-propylene block polypropylene resin, a homopolypropylene-ethylene-butene random terpolymer, a straight-chain low-density polyethylene (LLDPE) or crosslinked low-density polyethylene (crosslinked LDPE) can be suitably used, because such a row material itself has flexibility. The expansion ratio of foaming of the foamed molded piece is, preferably, within the range from 2 to 150, depending on the material of row-material beads. More specifically, prefoamed beads made of a polyolefin synthetic resin material having an expansion ratio in the range from 3 to 90, preferably in the range from 3 to 60 are used because the impact force is considerably large if the foaming expansion ratio is excessively low, and because impact energy cannot be sufficiently absorbed if the foaming expansion ratio is excessively high.As the material of the buckling energy absorbing member 20, a synthetic resin material, a high-density foamed material or a metallic material can be used if it is capable of absorbing an impact load by buckling deformation. More specifically, a synthetic resin material formed of a polystyrene synthetic resin, a polyolefin synthetic resin such as a polyethylene resin or a polypropylene resin, a copolymer of these resins or the like or a high-density foamed piece of such a resin material can be used. If the buckling energy absorbing member 20 is formed of a high-density foamed material, it is preferable to set the foaming expansion ratio to 20 or less to ensure that the buckling energy absorbing member 20 can buckle. At the time of selection from energy absorbing materials, it is preferable, from the viewpoint of recycling, to form both the compression energy absorbing member and the buckling energy absorbing member from a polypropylene resin.

In the impact energy absorbing member 3, when an impact load acts on the front bumper 4, the impact force acting on the compression energy absorbing member 10 in a single state has a tendency to increase with the increase in the displacement of the compression energy absorbing member 10, as shown in Figure 3, and the impact force acting on the buckling energy absorbing member 20 in a single state increases abruptly to a peak value in an initial stage of action of the impact force and has a tendency to decrease abruptly after passing the peak, as shown in Figure 3. Since the compression energy absorbing member 10 and the buckling energy absorbing member 20 are provided together in the impact energy absorbing member 3, the impact forces acting on the two energy absorbing members 10 and 20 are combined so that the impact force acting on the impact energy absorbing member 3 is generally constant substantially over the entire length of the time period during which impact energy is absorbed by the impact energy absorbing member 3, thus making it possible to effectively absorb impact energy substantially over the entire length of the impact energy absorption period while ensuring sufficiently high pedestrian protection performance by setting the impact force to a comparatively low strength. In designing of the impact energy absorbing member 3, a material, a foaming expansion ratio and a size for each portion in the compression energy absorbing member 10 and a material, a shape, a certain number of portions and a size for each portion in the buckling energy absorbing member 20 are set to obtain such an impact energy absorption characteristic. It is possible to freely design the impact energy absorption characteristic of the impact energy absorbing member 3, i.e., the energy absorption curve, by selecting a combination of the foaming expansion ratios, the materials, the shapes and the sizes of the portions in the compression energy absorbing member 10 and the buckling energy absorbing member 20.Description will be made of other embodiments in which the construction of the impact energy absorbing member 3 is partially changed. The same members are those in the above-described first embodiment are indicated by the same reference numerals and detailed description for them will not be repeated.

### (Compression energy absorbing member)

(1) Settings in terms of the number, sizes and formation positions of openings 11 of the compression energy absorbing member 10 can be freely made. For example, as in an impact energy absorbing member 3A shown in Figure 4, a compression energy absorbing member 10A having three openings 11A may be used in place of the compression energy absorbing member 10. Also, as in an impact energy absorbing member 3B shown in Figure 5, a compression energy absorbing member 10B having two openings 11B may be used in place of the compression energy absorbing member 10. Intermediate portions of the buckling portions 22 are supported by a partition wall portion 15 between the openings 11A or 11B.
(2) As in an impact energy absorbing member 3C shown in Figure 6, compression energy absorbing members 10C which are placed in the buckling energy absorbing member 20 without providing any buckling allowance space 13 may be used in place of the compression energy absorbing member 10. The compression energy absorbing member 10C placed between the two buckling energy absorbing members.20 and the compression energy absorbing members 10C placed outside the two buckling energy absorbing members 20 may be formed of the same material at different foaming expansion ratios or may be formed of different materials. In this case, full use can be made of the shock-absorbing effect of the compression energy absorbing members 10C, although the design of the impact energy absorbing member 3C becomes somewhat complicated. This arrangement is therefore preferable from the viewpoint of improving the shock-absorbing effect. (Buckling energy absorbing member)
(3) Settings in terms of the number, thickness and length of buckling portions 22 provided in the buckling energy absorbing member 20 can be freely made. For example, as in an impact energy absorbing member 3D shown in Figure 7, a buckling energy absorbing member 20D in which one buckling portion 22 is provided may be provided in place of the buckling energy absorbing member 20. Also, as in an impact energy absorbing member 3E shown in Figure 8, a buckling energy absorbing member 20E in which three buckling portions 22 are provided may be provided in place of the buckling energy absorbing member 20. Also, a buckling energy absorbing member in which buckling portions shorter in the left-right direction are provided integrally with the fixation portion 21 while being spaced apart from each other in the left-right direction may be used in place of the buckling energy absorbing member 20. Further, a buckling energy absorbing member in which a buckling portions each in the form of a vertical plate disposed in a substantially vertical plane are provided at equal intervals as projections on the fixation portion 21 or a buckling energy absorbing member in which buckling portions each placed in a horizontal plane and buckling portions each placed in a vertical plane are provided in a predetermined array as projections on the fixation portion 21 may be provided in place of the buckling energy absorbing member 20.
(4) As in an impact energy absorbing member 3F shown in Figure 9, a buckling energy absorbing member 20F having buckling portions 22F having tip ends projecting frontward beyond the compression energy absorbing member 10 may be used in place of the buckling energy absorbing member 20. In this case, a setting can be made such that the impact force acting on the impact energy absorbing member 3 is generally constant substantially over the entire length of the time period during which impact energy is absorbed by the impact energy absorbing member 3, as shown in Figure 10, even though energy absorbing deformation of the buckling energy absorbing member 20 starts earlier than energy absorbing deformation of the compression energy absorbing member 10 and the amount of deformation of the buckling energy absorbing member 20F before buckling is large.
   In a case where a plurality of buckling portions are provided, the arrangement may be such that at least one of them is formed as a buckling portion 22F having a tip end projecting frontward beyond the compression energy absorbing member 10, while the other buckling portions are formed as buckling portions 22 having tip ends extending to the vicinity of the outer surface of the compression energy absorbing member 10. For example, as in an impact energy absorbing member 3G shown in Figure 11, a buckling energy absorbing member 20G having three buckling portions consisting of two buckling portions 22F and one buckling portion 22 disposed between the two buckling portions 22F may be used in place of the buckling energy absorbing member 20.
(5) As shown in Figure 12, a buckling energy absorbing member 20H in which a fixation portion 21H and a pair of buckling portions 22H are formed by bending two side portions of a member in the form of a plate may be used in place of the buckling energy absorbing member 20.
(6) As in an impact energy absorbing member 3I shown in Figure 13, a buckling energy absorbing member 20I in which a portion 23 having a closed sectional shape and fixed as a base portion to the fixation portion 21 is provided and buckling portions 22I which extend frontward are formed on the portion 23 having the closed sectional shape may be provided in place of the buckling energy absorbing member 20.
(7) As in an impact energy absorbing member 3J shown in Figure 14, a buckling energy absorbing member 20J in which a receiving portion 24 in the form of a plate for receiving an impact load is formed integrally with tip ends of the buckling portions 22 may be provided in place of the buckling energy absorbing member 20. In this case, an impact load can be received through the surface of the receiving portion 24 and, therefore, the pedestrian protection performance can be further improved. Also in the case of the impact energy absorbing members other than the impact energy absorbing member 3J, the same effect can be obtained by reversing the impact energy adsorbing member in the front-rear direction so that the fixation portion is placed on the bumper facer side.
(8) As in an impact energy absorbing member 3K shown in Figure 15, a buckling energy absorbing member 20K having a buckling portion 22K on which ribs 25 are formed at suitable intervals in the lengthwise direction may be provided in place of the buckling energy absorbing member 20. Also, a buckling energy absorbing member 20L, such as shown in Figure 16, which is formed by removing the fixation portion 21 in the buckling energy absorbing member 20K, and which has only a buckling portion 22L and ribs 25, may be used.
(9) A buckling energy absorbing member 20M, such as shown in Figure 17, which has a buckling portion 22M having a wavelike shape as seen in a front view and standing upright on the fixation portion 21, may be used in place of the buckling energy absorbing member 20. Also, a buckling energy absorbing member 20N, such as shown in Figure 18, which has a buckling portion 22N having a wavelike shape as seen in a plan view and standing upright on the fixation portion 21, may be used.
(10) A buckling portion in the form of a cylinder, a truncated cone, a prism or the like may be provided as a projection on the fixation portion 21 in place of the buckling portion 22 in the form of a plate. Each of buckling portions having such three-dimensional shapes may be formed so as to be closed at its top and at its bottom or closed only at its bottom, or may be formed as a tube open at its top and at its bottom. Also, a plurality of buckling portions each formed without the fixation portion 21 may be disposed. More specifically, a buckling energy absorbing member 20P, such as shown in Figure 19, which has a cylindrical buckling portion 22P and a fixation portion 21P in the form of a flange formed so as to project outward from the base end of the buckling portion 22P in place of the fixation portion 21 and the buckling portion 22 may be used, and buckling energy absorbing members 20P may be disposed at set intervals in the lengthwise direction of the bumper with their center axes positioned along the front-rear direction.A combination of the compression energy absorbing members and the buckling energy absorbing members in the first and other embodiments described above may be freely selected. A compression energy absorbing member and a buckling energy absorbing member manufactured separately from each other may be integrally combined by an adhesive or the like. A compression energy absorbing member and a buckling energy absorbing member may be integrally formed by insert molding in such a manner that the buckling energy absorbing member manufactured in advance is set in a mold for forming the compression energy absorbing member. As in an impact energy absorbing member 3Q shown in Figure 20, the buckling energy absorbing member 20 may be removed and a bumper facer 2Q having buckling portions 22Q extending rearward, formed integrally therewith and capable of being inserted in an assembly space formed by an opening 11 and fixation grooves 12 to mount the compression energy absorbing member 10 may be provided in place of the bumper facer 2.

### (Second Embodiment)

In this second embodiment, the first vehicle impact energy absorbing member in accordance with the present invention is applied to a front side door of a motor vehicle.

Description will be made of the front side door 40 with reference to Figures 21 and 22. A side door main body 43 constituted by a door outer panel 41 and a door inner panel 42 and closed as viewed in section is provided and a door trim 46 is provided on the compartment side of the side door main body 43. The door trim 46 has an upper projecting portion 44 and a lower projecting portion 45 which extend through its entire length in the vehicle front-rear direction, and which are disposed in correspondence with the breast and waist of a passenger so as to project on the compartment side. An upper impact energy absorbing member 47 is provided in the upper projecting portion 44 between the door inner panel 42 and the door trim 46, while a lower impact energy absorbing member 48 is provided in the lower projecting portion 45 between the door inner panel 42 and the door trim 46.

Each of the upper and lower impact energy absorbing members 47 and 48 has basically the same construction as that of the impact energy absorbing member 3 in the above-described first embodiment, but differs in size from the same. The corresponding impact energy absorbing member can be understood as capable of being mounted on the side door 40 if the bumper reinforcing member 1 in the first embodiment is reread as door inner panel 42; the bumper facer 2 as door trim 46; and the vehicle width direction as the vehicle front-rear direction.

More specifically, the upper and lower impact energy absorbing members 47 and 48 have, as members corresponding to the compression energy absorbing member 10 and the buckling energy absorbing member 20 in the above-described first embodiment, compression energy absorbing members 50 and 55 formed of synthetic resin foamed molded pieces and buckling energy absorbing members 60 and 65 formed of synthetic resin molded pieces, and are constructed so that impact energy acting on the impact energy absorbing members 47 and 48 is absorbed by the compression energy absorbing members 50 and 55 substantially over the entire length of the impact energy absorption time period while the compression energy absorbing members 50 and 55 are being compression-deformed, and by the buckling energy absorbing members 60 and 65 about an initial stage in the impact energy absorption time period while the buckling energy absorbing members 60 and 65 are buckled and deformed.

The compression energy absorbing members 50 and 55 are formed into shapes respectively corresponding to the spaces between the door inner panel 42 and the upper projecting portion 44 and the lower projecting portion 45 of the door trim 46 and are fitted into the spaces without a substantial gap. The compression energy absorbing members 50 and 55 are disposed on the compartment side of the door inner panel 42 to absorb impact energy applied to a passenger. In each of the compression energy absorbing members 50 and 55, one opening 51 or 56 extending in the vehicle front-rear direction is formed at an intermediate position in the height direction, the ends of the opening in the height direction being in the vicinity of the two ends of the compression energy absorbing member 50 or 55.

The buckling energy absorbing members 60 and 65 are members made of a synthetic resin, Π-shaped in section and having fixation portions 61 and 66 in the form of elongated generally-flat plates and pairs of upper and lower buckling portions 62 and 67 which are fixed on intermediate portions of the fixation portions 61 and 66 perpendicularly to the same while being spaced apart from each other, and which are in the form of elongated generally-flat plates substantially equal in length to the fixation portions 61 and 66.

One of the impact energy absorbing members 47 and 48 can be removed, and any of impact energy absorbing members 47 and 48 of the various constructions described above by way of example in the description of the first embodiment can be assembled in the same manner in place of the upper and lower impact energy absorbing members 47 and 48. In this second embodiment, the present invention is applied to the front side door 40 on the driver seat side. However, the present invention can also be applied to a front side door on the passenger seat side and can be applied to left and right rear side doors in the same manner.

### (Third Embodiment)

In this third embodiment, the first vehicle impact energy absorbing member in accordance with the present invention is applied to a front pillar 70 of a motor vehicle. Description will be made of the front pillar 70 with reference to Figures 23 and 24. A pillar main body 74 constituted by a pillar outer panel 71 and a pillar inner panel 72 and closed as viewed in section is provided and a pillar trim 73 is provided on the compartment side of the pillar main body 74. An impact energy absorbing member 75 is provided between the pillar inner panel 72 and the pillar trim 73.

The impact energy absorbing member 75 has basically the same construction as that of the impact energy absorbing member 3 in the above-described first embodiment, but differs in size from the same. The corresponding impact energy absorbing member can be understood as capable of being mounted on the front pillar 70 if the bumper reinforcing member 1 in the first embodiment is reread as pillar inner panel 72; the bumper facer 2 as pillar trim 73; and the vehicle width direction as the lengthwise direction of the pillar 70.More specifically, the impact energy absorbing member 75 has, as members corresponding to the compression energy absorbing member 10 and the buckling energy absorbing member 20 in the above-described first embodiment, a compression energy absorbing member 80 formed of a synthetic resin foamed molded piece and.a buckling energy absorbing member 90 formed of a synthetic resin molded piece, and is constructed so that impact energy acting on the impact energy absorbing member 75 is absorbed by the compression energy absorbing member 80 substantially over the entire length of the impact energy absorption time period while the compression energy absorbing member 80 is being compression-deformed, and by the buckling energy absorbing member 90 about an initial stage in the impact energy absorption time period while the buckling energy absorbing member 90 is buckled and deformed. The compression energy absorbing member 80 is formed into a shape corresponding to the space between the pillar inner panel 72 and the pillar trim 73 and is fitted into the space without a substantial gap. The compression energy absorbing member 80 is disposed on the compartment side of the pillar inner panel 72 to absorb impact energy applied to a passenger. In the compression energy absorbing member 80, one opening 81 extending in the lengthwise direction of the pillar 70 is formed at an intermediate position in the height direction, the ends of the opening 81 in the lengthwise direction being in the vicinity of the two ends of the compression energy absorbing member 80.The buckling energy absorbing member 90 is a member made of a synthetic resin, Π-shaped in section and having a fixation portion 91 in the form of an elongated generally-flat plate and a pair of upper and lower buckling portions 92 which are fixed on an intermediate portion of the fixation portion 91 perpendicularly to the same while being spaced apart from each other, and which are in the form of elongated generally-flat plates substantially equal in length to the fixation portion 91. In place of the impact energy absorbing member 75, any of impact energy absorbing members 75 of the various constructions described above by way of example in the description of the first embodiment can be assembled in the same manner. In this third embodiment, the present invention is applied to the front pillar 70. However, the present invention can also be applied to a center pillar and a rear pillar in the same manner.

While the first to third embodiments have been described with respect to cases of application of the present invention to a bumper, a side door and a pillar of a vehicle, the present invention can also be applied in the same manner to portions other than these.

Description will next be made of a shock-absorbing performance test.

### (Test piece)

A compression energy absorbing member 30 formed of a foamed molded piece having a size shown in Figures 25 and 26 was made by a bead method using prefoamed beads made of a polypropylene resin and packing the prefoamed beads in a mold so that the molded piece expansion ratio was 11 (using EPERAN-PP, a raw material produced by KANEKA CORPORATION). A buckling energy absorbing member 31 formed of a non-foamed piece in the form of a plate made of a polypropylene resin and having a size shown in Figures 25 and 26 was also made. Six test pieces formed by mounting two buckling energy absorbing members 31 in the compression energy absorbing member 30 in a state of being spaced apart from each other were made.

One test piece formed of a foamed molded piece which has an external size set to the same size as that of the compression energy absorbing member 30 and which has no opening corresponding to the central opening of the compression energy absorbing member 30 was also made as a comparative example.

### (Testing method)

The seven test pieces were successively set on a supporting base, an impacting object formed of a round rod having a weight of 21.3 kg and a diameter of 70 mm was caused to collide at a speed of 4.0 m/s against a central portion of the test piece at a center in the lengthwise direction along the widthwise direction, and the displacement and acceleration of the test piece at the time of collision were measured, thereby obtaining the results of measurement of the comparative example shown in Figure 27 and the results of measurement of the examples 1 to 6 of the present invention shown in Figures 28 to 33. From these results, the displacement of each test piece, the maximum acceleration, the impact force, the amount of energy absorption and the energy absorption efficiency were obtained to form Table 1.

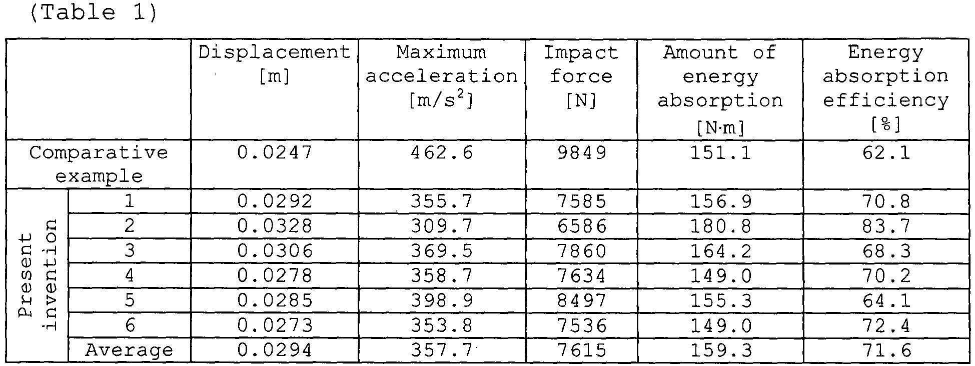

From Table 1, it can be understood that the impact values in the examples 1 to 6 of the present invention using the compression energy absorbing member 30 and the buckling energy absorbing member 31 were reduced to 22.6% of that in the comparative example formed only of a foamed molded piece, the energy absorption efficiency in the examples of the present invention was improved by 10%, and the pedestrian protection performance was thus improved.

Description will now be made of a second vehicle impact energy absorbing members which is not part of the present invention.

As shown in Figure 34, a bumper reinforcing member 101 extending in the vehicle width direction is provided in a front end portion of a vehicle body; a bumper facer 102 is provided on the front side of the bumper reinforcing member 101 so as to cover the same; and an impact energy absorbing member 103 is mounted between the bumper reinforcing member 101 and the bumper facer 102. A front bumper 104 is constituted by the bumper facer 102 and the impact energy absorbing member 103. An impact load at the time of front-on collision is transferred to the impact energy absorbing member 103 through the bumper facer 102 and is received by these two members while these members are being deformed by the impact load. When a larger impact load acts on the bumper, the impact load acts on the bumper reinforcing member 101 to be received by the bumper reinforcing member 101 while the bumper reinforcing member 101 is being deformed by the impact load. The impact energy absorbing member 103 has, as shown in Figures 34 to 36, a fixation portion 110 disposed on the front side of the bumper reinforcing member 101 along the vehicle width direction, and four buckling energy absorbing portions 111 extending frontward from the fixation portion 110. The impact energy absorbing member 103 is provided inside the bumper facer 102 substantially through the entire length in the vehicle width direction. As the material of the impact energy absorbing member 103, a solid member made of a synthetic resin material, a high-density foamed piece or a metallic material can be used as long as it is capable of absorbing an impact load by buckling deformation. As the synthetic resin material, a solid member or high-density foamed piece of a synthetic resin material composed of a polystyrene synthetic resin, a synthetic resin material formed of a polyolefin synthetic resin such as a polyethylene resin or a polypropylene resin, a copolymer of these resins or the like can be used. If the buckling energy absorbing member 103 is formed of a high-density foamed material, it is preferable to set the foaming expansion ratio to 45 or less to ensure that the buckling energy absorbing portions 111 can buckle. From the viewpoint of recycling in particular, it is preferable to form the impact energy absorbing member 103 from a polypropylene resin. As a metallic material, a light alloy such as an aluminum alloy or magnesium alloy can be suitably used which is lightweight and can easily be buckled and deformed. As the fixation portion 110, a portion of any construction can be used if it is capable of fixing the buckling energy absorbing portions 111 on the bumper reinforcing member 101. The fixation portion 110 may be provided through the entire length of the impact energy absorbing member 103 or fixation portions 110 may be disposed at certain intervals in vehicle width direction.The four buckling energy absorbing portions 111 are disposed parallel to each other in a state of being spaced apart from each other in the vertical direction. Two 111a of the four buckling energy absorbing portions 111 are formed so as to be slightly longer than the other two buckling energy absorbing portions 111b in the front-rear direction (slightly higher) and protrude frontward beyond the buckling energy absorbing portions 111b. A buckling allowance space 112 is formed between each adjacent pair of the buckling energy absorbing portions 111, and a setting is made such as to avoid mutual interference between the buckling energy absorbing portions 111 when the buckling energy absorbing portions 111 buckle, thereby enabling the buckling energy absorbing portions 111 to be buckled and deformed smoothly and reliably.

In this buckling energy absorbing member 103, impact timing for staring absorption of impact energy in the buckling energy absorbing portions 111b is set with a delay corresponding to the difference between the lengths of the buckling energy absorbing portions 111a and 111b from impact timing for starting absorption of impact energy in the buckling energy absorbing portions 111a, as shown in Figure 39, and it is possible to adjust the apparent peak value timing of the buckling energy absorbing portions 111a and 111b to different timings by selecting the lengths of the buckling energy absorbing portions 111a and 111b. Therefore, a setting is made such that the impact forces on the buckling energy absorbing portions 111a and 111b reach their peak values one after another during the time period from the start to the completion of impact absorption, thereby enabling the impact force on the vehicle impact energy absorbing member 103 to be maintained generally constantly over the entire length of the time period during which impact energy is absorbed by the impact energy absorbing member 103. A setting is also made such that the impact force on the vehicle impact energy absorbing member 103 is equal to or lower than an allowable value (e.g., 200 to 300 m/s²) at which the desired pedestrian and passenger protection performance can be ensured, thus enabling absorption of a maximized amount of impact energy while limiting the impact force and ensuring the desired pedestrian and passenger protection performance. The projecting lengths of the buckling energy absorbing portions 111a and 111b are made different to provide a difference in impact timing for starting impact energy absorption, thus making a such a setting that the impact force on the buckling energy absorbing portions 111 increases two steps to have two peak values. However, the peak value timing may be suitably set in such a manner that at least one of the number, array, thickness, foaming expansion ratio, disposition density and cross-sectional shape of buckling energy absorbing portions 111 is changed to set a difference in buckling characteristic after collision between the buckling energy absorbing portions 111, and the peak value timing for making the impact force have a peak value after actual collision is adjusted according to the different characteristics. Also, any combination of at least two of a buckling energy absorbing portion formed of a foamed molded piece made of a synthetic resin material, a buckling energy absorbing portion formed of a solid member made of a synthetic resin material and a buckling energy absorbing portion formed of a metallic material may be used and set so that the impact force on the buckling energy absorbing portions peaks in a stepping manner or continuously, and a combination of buckling energy absorbing portions differing in impact timing and buckling energy absorbing portions differing in peak value timing may be used and set so that the impact force on the buckling energy absorbing portions peaks in a stepping manner or continuously. More specifically, the construction of the impact energy absorbing member which is not part of the present invention may partially changed to provided arrangements described below. The same members are those in the above-described impact energy absorbing member are indicated by the same reference numerals and detailed description for them will not be repeated.
(1) In the above-described impact energy absorbing member which is not part of the present invention longer buckling energy absorbing portions 111a are disposed on the opposite sides of the pair of shorter buckling energy absorbing portions 111b in the vertical direction. Alternatively, as in an impact energy absorbing member 103A shown in Figure 38, shorter buckling energy absorbing portions 111b may be disposed on the opposite sides of a pair of longer buckling energy absorbing portions 111a in the vertical direction. Also, buckling energy absorbing portions 111b and 111a may be alternately disposed.
(2) In the impact energy absorbing member 103, buckling energy absorbing portions 111a and 111b defined by two projecting lengths are provided. However, buckling energy absorbing portions defined by three or more different lengths may be used. In such a case, the impact force on the impact energy absorbing member 103 at the time of collision can be adjusted more finely.
(3) As the impact energy absorbing member 103, a plurality of types of buckling energy absorbing portions differing in thickness may be used. Also, as in an impact energy absorbing member 103B shown in Figures 39 and 40, a plurality of types of buckling allowance spaces 112B differing in depth may be formed in place of the buckling allowance spaces 112 and a buckling energy absorbing portion 111B may be provided which includes upper and lower pairs of buckling energy absorbing portions 120 changed in thickness between the tip end side and the base end side and a buckling energy absorbing portion 111a disposed between the pairs of buckling energy absorbing portions 120.
(4) As in an impact energy absorbing member 103C shown in Figure 41, buckling energy absorbing portions 111C extending frontward from the fixation portion 110 to the vicinity of bumper facer 102 may be provided and a setting of peak value timing after collision may be made in such a manner that front end portions 121 of the buckling energy absorbing portions 111C are formed so as to have a wavelike shape undulating in the front-rear direction continuously or in a stepping manner in a generally horizontal plane to change the peak value timing continuously or in a stepping manner in correspondence with peaks and valleys of the wavelike shape. The impact timing may be adjusted by shifting the phases of the waves of adjacent pairs of the buckling energy absorbing portions 111C or by changing the period of the waves.
(5) As in an impact energy absorbing member 103D shown in Figure 42, buckling energy absorbing portions 111D extending frontward from the fixation portion 110 to the vicinity of bumper facer 102 and having slits 122 formed therein at set intervals in the vehicle width direction and extending from their front edges toward their rear portions may be provided and a setting of the depths of adjacent pairs of the slits 122 may be made such that the rear ends of the slits 122 are positioned along a wavelike shape undulating in the front-rear direction in a stepping manner. The impact timing may be adjusted by shifting the phases of the waves of adjacent pairs of the buckling energy absorbing portions 111D or by changing the period of the waves.
(6) As in an impact energy absorbing member 103E shown in Figures 43 and 44, a plurality of buckling energy absorbing portions 111E arranged at set intervals in the vehicle width direction and extending frontward may be provided vertically on the fixation portion 110 and the front ends of the buckling energy absorbing portions 111E arranged near the bumper facer 102 may be formed in a wavelike shape undulating in the front-rear direction in a continuous or stepping manner in a vertical plane to provide a setting such that impact timing for starting absorption of impact energy is changed continuously or in a stepping manner in correspondence with peaks and valleys of the wavelike shape.
(7) As in an impact energy absorbing member 103F shown in Figures 45 and 46, a plurality of buckling energy absorbing portions 111F arranged at set intervals in the vehicle width direction and extending frontward may be provided vertically on the fixation portion 110, and a setting of the height of the buckling energy absorbing portions 111F may be made such that the front ends of the buckling energy absorbing portions 111F form a wavelike shape undulating in the front-rear direction in a stepping manner in a horizontal plane.
(8) Buckling energy absorbing portions 111 having any shape other than the shape of a plate can be used. As in impact energy absorbing members 103G and 103H shown in Figures 47(a) and 47(b), buckling energy absorbing portions 125 in the form of cylinders or prisms may be used. Also, as in an impact energy absorbing member 103I shown in Figure 47(c), buckling energy absorbing portions 126 and 127 in the form of oval or elongated ribs may be used. Also, as in an impact energy absorbing member 103J shown in Figure 47(d), buckling energy absorbing portions 128 in the form of circular or rectangular tubes or truncated cones may be used.
(9) In a portion where a delay in peak value timing after collision is required, the density at which buckling energy absorbing portions are arranged or the sectional area of buckling energy absorbing portions may be increased relative to the density or sectional area in the other portion. For example, as in the impact energy absorbing member 103H shown in Figure 47(b), the density of arrangement of buckling energy absorbing portions 125 may be increased at an intermediate position in the height direction to cause a delay in peak value timing after collision. Also, as in the impact energy absorbing member 103I shown in Figure 47(c), the length of buckling energy absorbing portions 126 in the vehicle width direction at two positions in the vertical direction is set shorter than buckling energy absorbing portions 127 at an intermediate position in the vertical direction such that the sectional area of buckling energy absorbing portions 127 at the intermediate position in the vertical direction is set larger to cause a corresponding delay in peak value timing after collision.
(10) The buckling energy absorbing portion 111 and the fixation portion 110 may be formed integrally with each other or may be separately formed and integrally combined by an adhesive or the like. If this construction is adopted, an operation for assembling the impact energy absorbing member 103 is required. However, an impact energy absorbing member having a plurality of types of buckling energy absorbing portions differing in foaming expansion ratio for example can be easily manufactured. Also, an impact energy absorbing member formed by using a freely-selected combination of at least two of a buckling energy absorbing portion formed of a foamed molded piece made of a synthetic resin material, a buckling energy absorbing portion formed of a solid member made of a synthetic resin material and a buckling energy absorbing portion formed of a metallic material can be easily manufactured. If a plurality of types of buckling energy absorbing portions differing in foaming expansion ratio for example are used, the impact force on the buckling energy absorbing portions after collision can be adjusted in the vicinity of a predetermined value, because buckling deformation can occur more easily if the foaming expansion ratio is increased.
(11) As in an impact energy absorbing member 103K shown in Figure 48, a buckling energy absorbing portion 111K in which a receiving portion 130 in the form of a plate for receiving an impact load is formed integrally with tip ends of buckling energy absorbing portions 111 may be provided in place of the buckling energy absorbing portion 111. In this case, an impact load can be received through the surface of the receiving portion 130, thereby making it possible to further improve the pedestrian protection performance. In the case of the impact energy absorbing members other than the impact energy absorbing member 103K, however, the same effect can also be obtained by reversing the impact energy absorbing member in the front-rear direction so that the fixation portion 110 is placed on the bumper facer 102 side.
(12) As in an impact energy absorbing member 103L shown in Figure 49, arrangement may be adopted in which buckling energy absorbing portions 131 extending rearward are formed on the bumper facer 102 along the vehicle width direction; a buckling energy absorbing portion 111L in which three buckling energy absorbing portions 111a are provided in a state of being spaced apart from each other in the vertical direction is provided; the buckling energy absorbing portions 131 is formed so as to be shorter than the buckling energy absorbing portions 111a; and impact energy is absorbed by the buckling energy absorbing portions 111a and 131. The arrangement may alternatively be such that the buckling energy absorbing portion 111L on the bumper reinforcing member 101 side is removed and buckling energy absorbing portions 111a and 131 are formed on the bumper facer 102.
The second vehicle impact energy absorbing member which is not part of the present invention is applied to a front side door of a motor vehicle.

Description will be made of the front side door 140 with reference to Figures 50 and 51. A side door main body 143 constituted by a door outer panel 141 and a door inner panel 142 and closed as viewed in section is provided and a door trim 146 is provided on the compartment side of the side door main body 143. The door trim 146 has an upper projecting portion 144 and a lower projecting portion 145 which extend through its entire length in the vehicle front-rear direction, and which are disposed in correspondence with the breast and waist of a passenger so as to project on the comportment side. An upper impact energy absorbing member 147 is provided in the upper projecting portion 144 between the door inner panel 142 and the door trim 146, while a lower impact energy absorbing member 148 is provided in the lower projecting portion 145 between the door inner panel 142 and the door trim 146.

Each of the upper and lower impact energy absorbing members 147 and 148 has basically the same construction as that of the impact energy absorbing member 103 in the above-described fourth embodiment, but differs in size from the same. The corresponding impact energy absorbing member can be understood as capable of being mounted on the side door 140 if the bumper reinforcing member 101 in the fourth embodiment is reread as door inner panel 142; the bumper facer 102 as door trim 146; and the vehicle width direction as the vehicle front-rear direction. More specifically, the impact energy absorbing member 147 has a fixation portion 151 in the form of a generally-flat plate elongated in the vehicle front-rear direction, and three buckling energy absorbing portions 152 extending from the fixation portion 151 to the door trim 146 side. Upper and lower buckling energy absorbing portions 152a in the buckling energy absorbing portions 152 are disposed so as to extend to the vicinity of the door trim 146, and a buckling energy absorbing portion 152b disposed between the two buckling energy absorbing portions 152a is formed so as to be shorter than the buckling energy absorbing portions 152a. The impact energy absorbing member 148 has a fixation portion 153 in the form of a generally-flat plate elongated in the vehicle front-rear direction, and three buckling energy absorbing portions 154 extending from the fixation portion 153 to the door trim 146 side. Upper and lower buckling energy absorbing portions 154a in the buckling energy absorbing portions 154 are disposed so as to extend to the vicinity of the door trim 146, and a pair of buckling energy absorbing portions 154b disposed between the two buckling energy absorbing portions 154a are formed so as to be shorter than the buckling energy absorbing portions 154a. The buckling energy absorbing portions 152a and 152b and the buckling energy absorbing portions 154a and 154b thus formed and differing in length are used to absorb a maximized amount of impact energy while shifting the impact timing for starting absorption of impact energy in the buckling energy absorbing portion so that the impact force does not exceed an allowable value.

The second vehicle impact energy absorbing member which is not part of the present invention is applied to a front pillar 160 of a motor vehicle.

Description will be made of the front pillar 160 with reference to Figures 52 and 53. A pillar main body 164 constituted by a pillar outer panel 162 and a pillar inner panel 161 and closed as viewed in section is provided and a pillar trim 163 is provided on the compartment side of the pillar main body 164. An impact energy absorbing member 165 is provided between the pillar inner panel 161 and the pillar trim 163. The impact energy absorbing member 165 has basically the same construction as that of the impact energy absorbing member 103 in the above-described impact energy absorbing member, but differs in size from the same. The corresponding impact energy absorbing member can be understood as capable of being mounted on the front pillar 160 if the bumper reinforcing member 101 is reread as pillar inner panel 161; the bumper facer 102 as pillar trim 163; and the vehicle width direction as the lengthwise direction of the pillar 160.

More specifically, the impact energy absorbing member 165 has a fixation portion 171 in the form of a generally-flat plate elongated along the pillar inner panel 161, and seven buckling energy absorbing portions 172 extending from the fixation portion 171 to the pillar trim 163 side. Buckling energy absorbing portions 172a in the buckling energy absorbing portions 172 are disposed so as to extend to the vicinity of the pillar trim 163, and buckling energy absorbing portions 172b are formed so as to be shorter than the buckling energy absorbing portions 172a. The buckling energy absorbing portions 172a and 172b are disposed alternately. The buckling energy absorbing portions 172a and 172b thus formed and differing in length are used to absorb a maximized amount of impact energy while shifting the impact timing for starting absorption of impact energy in the buckling energy absorbing portions 172 so that the impact force does not exceed an allowable value.

Description will next be made of a shock-absorbing performance test.

### (Test piece)

Buckling energy absorbing members formed by a bead method using prefoamed beads made of a polypropylene resin (using EPERAN-PP, a raw material produced by KANEKA CORPORATION), i.e., buckling energy absorbing members 180 in the form of plates having a molded piece expansion ratio of 4.8, a height of 60 mm, a thickness of 10 mm and a length of 300 mm, as shown in Figure 54, buckling energy absorbing members 181 in the form of plates having a height of 45 mm, a thickness of 10 mm and a length of 300 mm, bottom plates 182 in the form of plates having a width of 20 mm, a thickness of 10 mm and a length of 300 mm, and buckling energy absorbing members 180A and 181A having the same sizes as the buckling energy absorbing members 180 and 181 but having the foaming expansion ratio set to 4.0 (using EPERAN-PP, a raw material produced by KANEKA CORPORATION), were made.
Example 11 of the present invention: A test piece was made in which, as shown in Figure 54(a), two buckling energy absorbing members 180 were set upright substantially in parallel with each other while being spaced apart from each other by a distance of 80 mm; two buckling energy absorbing members 181 were set upright inside the buckling energy absorbing members 180 while being spaced apart from each other by a distance of 20 mm; and these four buckling energy absorbing members 180 and 181 were integrally connected by three bottom plates 182. Example 12 of the present invention: A test piece formed by removing the bottom plates 182 from Example 11 of the present invention was made.
Example 13 of the present invention: A test piece was made in which, as shown in Figure 54(c), two buckling energy absorbing members 181A were set upright substantially in parallel with each other while being spaced apart from each other by a distance of 80 mm and two buckling energy absorbing members 180A were set upright inside the buckling energy absorbing members 181A while being spaced apart from each other by a distance of 20 mm.
Example 14 of the present invention: A test piece was made in which, as shown in Figure 54(d), two buckling energy absorbing members 180 were set upright substantially in parallel with each other while being spaced apart from each other by a distance of 80 mm and two buckling energy absorbing members 180B were set upright inside the buckling energy absorbing members 180 while being spaced apart from each other by a distance of 20 mm.
Comparative example 11: A test piece was made which was, as shown in Figure 55(a), formed of a compression energy absorbing member 185 in the form of a plate having a foaming expansion ratio of 17 (using EPERAN-PP, a raw material produced by KANEKA CORPORATION), a height of 60 mm, a width of 100 mm and a length of 300 mm.
Comparative example 12: A test piece was made in which, as shown in Figure 55(b), two buckling energy absorbing members 180B having a thickness of 3.0 mm, a height of 38 mm and a length of 300 mm and made of a solid polypropylene resin were set upright substantially in parallel with each other while being spaced apart from each other by a distance of 25 mm. Comparative example 13: A test piece was made in which two buckling energy absorbing members having a thickness of 2.5 mm, a height of 38 mm and a length of 300 mm and made of a solid polypropylene resin were set upright substantially in parallel with each other while being spaced apart from each other by a distance of 25 mm, as were those in comparative example 2.

### (Testing method)

The test pieces in the examples of the present invention were successively set on a supporting base, an impacting object formed of a round rod having a weight of 34.8 kg for examples 11 and 12 of the present invention, 40.8 kg for example 13 of the present invention, and 28.8 kg for example 14 of the present invention, and a diameter of 70 mm was caused to fall from a height of 81.6 cm to collide against a central portion of the test piece at a center in the lengthwise direction along the widthwise direction, and the relationship between the displacement and acceleration of the test piece at the time of collision was measured, thereby obtaining measurement results shown in Figures 56 to 59. The test pieces in the comparative examples were successively set on the supporting base; an impacting object formed of a round rod having a weight of 40.8 kg and a diameter of 70 mm was caused to fall from a height of 81.6 cm to collide against a central portion of the test piece in comparative example 11 at a center in the lengthwise direction along the widthwise direction; an impacting object formed of a round rod having a weight of 21.3 kg and a diameter of 70 mm was caused to fall from a height of 21.0 cm to collide against a central portion of the test piece in comparative example 12; an impacting object formed of a round rod having a weight of 21.3 kg and a diameter of 70 mm was caused to fall from a height of 16.0 cm to collide against a central portion of the test piece in comparative example 13; and the relationship between the displacement and acceleration of each test piece at the time of collision was measured, thereby obtaining measurement results shown in Figures 60 to 62. From these results, the displacement of each test piece, the maximum acceleration, the impact force, the amount of energy absorption and the energy absorption efficiency were obtained to form Table 2.

**(Table 2)**

| | | Displacement [m] | Maximum acceleration [m/s²] | Impact force [N] | Amount of energy absorption [N·m] | Energy absorption efficiency [%] |
|---|---|---|---|---|---|---|
| Examples of the present invention | 11 | 0.04110 | 354.1 | 7546 | 191.1 | 61.62 |
| | 12 | 0.04576 | 266.3 | 5674 | 188.1 | 72.43 |
| | 13 | 0.04087 | 282.8 | 6027 | 182.0 | 73.9 |
| | 14 | 0.03975 | 261.2 | 5566 | 153.8 | 69.51 |
| Comparative examples | 11 | 0.04505 | 486.9 | 10368 | 260.6 | 55.73 |
| | 12 | - | 396.2 | 8439 | - | - |
| | 13 | - | 231.8 | 4937 | - | - |

| | | | | | | |
|---|---|---|---|---|---|---|
| * In the case of comparative examples 12 and 13, impact energy was not completely absorbed. Therefore, it was not possible to obtain the displacement, the amount of energy absorption and the energy absorption efficiency. | | | | | | |

As can be understood from Figures 56 to 62, the acceleration was increased generally monotonously in comparatively example 11, and the acceleration was abruptly increased in an initial stage of collision in comparative examples 12 and 13 in which impact timing and peak value timing were set equal to each other and in which plates made of a solid polypropylene resin were used. In contrast, in examples 11 to 14 of the present invention, the acceleration in the range from collision in which the displacement was 0 to 40 mm was generally constant at 200 to 300 m/s². Since the amount of absorption of impact energy is determined by the area under the curve, it can be understood that in the examples of the present invention the amount of absorption of impact energy was increased while the maximum acceleration was limited.

In comparative examples 12 and 13, the maximum acceleration was increased, but the amount of absorption of impact energy was small and impact energy was not completely absorbed. Comparative example 1 was capable of absorbing impact energy, but examples 11 to 14 of the present invention were capable of reducing the impact value by about 27%, about 45%, about 42% and about 46%, respectively, in comparison with comparative example 11. In examples 11 to 14 of the present invention, improvements in energy absorption efficiency of about 6%, about 17%, about 18& and about 14%, respectively, were achieved. As can be understood from these results, the pedestrian protection performance and the passenger projection performance were improved.

### Industrial Applicability

In the vehicle impact energy absorbing member in accordance with the present invention, impact energy is absorbed by the combination of the compression energy absorbing member and the buckling energy absorbing member, and an impact force on the vehicle impact energy absorbing member can, therefore, be maintained generally constantly over the entire length of the time period during which impact energy is absorbed by the vehicle impact energy absorbing member. Therefore, if the impact force on the vehicle impact energy absorbing member is set to a target value at which a pedestrian and a passenger can be protected, it is possible to absorb a maximized amount of impact energy while ensuring the desired pedestrian and passenger protection performance by limiting the impact force.

If the compression energy absorbing member and the buckling energy absorbing member are arranged to start energy absorbing deformation under an impact force by substantially the same timing, impact energy can be absorbed by making full use of the space for disposition of the vehicle impact energy absorbing member capable of being mounted on a vehicle. Also, if the compression energy absorbing member and the buckling energy absorbing member are arranged to start energy absorbing deformation under an impact force by different timings, an optimum energy absorbing characteristic of the entire combination of the compression energy absorbing member and the buckling energy absorbing member can be realized by adjusting the timing for starting energy absorbing deformation of the compression energy absorbing member and the buckling energy absorbing member.

If a setting is made such that an impact force on the two energy absorbing members is generally constant over the entire length of the time period during which the impact energy is absorbed by the two energy absorbing members, or if the compression energy absorbing member is disposed so as to be compression-deformed over the entire length of the impact energy absorption time period, and if the buckling energy absorbing member is disposed so as to be buckled and deformed in an initial stage in the impact energy absorption time period, it is possible to efficiently absorb impact energy by effectively utilizing the entire impact energy absorption period while reducing the impact force acting on a pedestrian.

If the buckling energy absorbing member is provided through the entire width of the bumper in the front-rear direction, or if the buckling energy absorbing member is provided in a substantially horizontal plane along the lengthwise direction of the bumper and through the entire width of the bumper in the front-rear direction, an impact load can be caused to act on the buckling energy absorbing member from an initial state of collision and impact energy in the initial stage of collision can be effectively absorbed by the buckling energy absorbing member.

If the compression energy absorbing member is constituted by a foamed molded piece made of a synthetic resin, and if the foaming expansion ratio of the foamed molded piece forming the compression energy absorbing member is set to 2 to 150, the desired impact energy absorption characteristic can be realized by adjusting the foaming expansion ratio while ensuring the desired energy absorption performance, and the vehicle impact energy absorbing member can be constructed so as to be light in weight.

If the buckling energy absorbing member is constituted by a foamed molded piece made of a synthetic resin material, and if the foaming expansion ratio of the foamed molded piece is set to 20 or less, the compression energy absorbing member and the buckling energy absorbing member can be formed integrally with each other while ensuring the desired impact energy absorption performance, the number of assembly steps can be reduced and the vehicle bumper impact energy absorbing member can be constructed so as to be light in weight. Allowance spaces are provided on opposite sides of the buckling energy absorbing member, the buckling energy absorbing member can be buckled and deformed in the buckling allowance spaces.

If the buckling energy absorbing member is formed integrally with the compression energy absorbing member by insert molding, the molding process is somewhat complicated but the strength of mounting of the buckling energy absorbing member on the compression energy absorbing member can be improved and the number of vehicle assembly steps in a post process can be reduced.

If the buckling energy absorbing member and the compression energy absorbing member are separately formed and combined integrally with each other, the number of component parts is increased but the facility with which the compression energy absorbing member is formed can be improved and the two energy absorbing members can be firmly combined integrally with each other by an adhesive or the like.

If a core member for a vehicle bumper is formed by using the vehicle impact energy absorbing member, and if an impact force on the vehicle impact energy absorbing member is set to a target value at which a pedestrian can be protected, it is possible to absorb a maximized amount of impact energy while ensuring the desired pedestrian protection performance at the time of contact with the bumper.

If the buckling energy absorbing member is provided integrally with a bumper facer, and an assembly space for accommodating the buckling energy absorbing member is formed in the compression energy absorbing member, the number of component parts constituting the core can be reduced. Therefore this arrangement is preferable.

In a case where the vehicle impact energy absorbing structure in accordance with the present invention is applied to a bumper, an impact force on the vehicle impact energy absorbing member may be set to a target value at which a pedestrian can be protected to absorb a maximized amount of impact energy while ensuring the desired pedestrian protection at the time of contact with the bumper. In the case of an application to a door or a pillar, an impact force on the vehicle impact energy absorbing member may be set to a target value at which a pedestrian can be protected to absorb a maximized amount of impact energy while ensuring the desired pedestrian protection at the time of contact with the door or a pillar.

## Claims

1. A vehicle impact energy absorbing member for use in a bumper (4), a side door (40), or a pillar (70), the vehicle impact energy absorbing member comprising:
a compression energy absorbing member (10, 10A-10C, 50, 55, 80) constituted by a foamed molded piece made of a synthetic resin to absorb an impact energy by using compression deformation; and
a buckling energy absorbing member (20, 20D-20N, 20Q, 60, 65, 90) constituted by a solid member made of a synthetic resin material to absorb an impact energy by using buckling deformation, the buckling energy absorbing member having a buckling portion (22, 22F, 22H, 221, 22K-22N, 22P, 22Q, 62, 67, 92) which is in the form of a plate and capable of being buckled and deformed,
wherein said compression energy absorbing member has an opening portion (11, 11A, 11B, 51, 56, 81), the buckling portion of the buckling energy absorbing member passes through the opening with buckling allowance spaces (13) on opposite sides of the buckling portion, and a tip end of the buckling portion is placeable in the vicinity of a corresponding one of a bumper facer (2), a door trim (46), and a pillar trim (73), wherein the buckling allowance spaces are set that no mutual interference occurs between the inner wall surface of the opening portion (11, 11A, 11B, 51, 56, 81) of the compression energy absorbing member and the buckling portion when the buckling portion buckels.

2. The vehicle impact energy absorbing member according to claim 1,
wherein the compression energy absorbing member (10, 10A-10C, 50, 55, 80) is disposed so as to be compression-deformed over the entire length of the impact energy absorption time period.

3. The vehicle impact energy absorbing member according to claim 1 or 2, wherein the foaming expansion ratio of the foamed molded piece forming the compression energy absorbing member (10, 10A-10C, 50, 55, 80) is set to 2 to 150.

4. The vehicle impact energy absorbing member according to any one of claims 1 to 3,
wherein the buckling energy absorbing member (20, 20D-20N, 20Q, 60, 65, 90) is constituted by a foamed molded piece made of a synthetic resin material.

5. The vehicle impact energy absorbing member according to claim 4,
wherein the foaming expansion ratio of the foamed molded piece forming the buckling energy absorbing member (20, 20D-20N, 20Q, 60, 65, 90) is set to 20 or less.

6. The vehicle impact energy absorbing member according to any one of claims 1 to 5,
wherein the buckling energy absorbing member (20, 20D-20N, 20Q, 60, 65, 90) is formed integrally with the compression energy absorbing member (10, 10A-10C, 50, 55, 80) by insert molding.

7. The vehicle impact energy absorbing member according to any one of claims 1 to 6,
wherein the buckling energy absorbing member (20, 20D-20N, 20Q, 60, 65, 90) and the compression energy absorbing member (10, 10A-10C, 50, 55, 80) are separately formed and combined integrally with each other.

8. A vehicle impact energy absorbing structure comprising a bumper reinforcing member (1) provided in a front end portion of a vehicle along the vehicle width direction, a bumper face (2) covering the bumper reinforcing member (1), and the vehicle impact energy absorbing member according to any one of claims 1 to 7, the vehicle impact energy absorbing member being provided in a space between the bumper reinforcing member (1) and the bumper facer (2).

9. The vehicle impact energy absorbing structure according to claim 8,
wherein the buckling energy absorbing member (20, 20D-20N, 20Q, 60, 65, 90) is provided integrally with the bumper facer (2), and an assembly space for accommodating the buckling energy absorbing member (20, 20D-20N, 20Q, 60, 65, 90) is formed in the compression energy absorbing member (10, 10A-10C, 50, 55, 80).

10. A vehicle bumper comprising the vehicle impact energy absorbing member according to any one of claims 1 to 7,
wherein the vehicle impact energy absorbing member is a core member of a vehicle bumper (4).

11. The vehicle bumper according to claim 10,
wherein the buckling energy absorbing member (20, 20D-20N, 20Q, 60, 65, 90) is provided through the entire width of the bumper (4) in the front-rear direction.

12. The vehicle bumper according to claim 10 or 11,
wherein the buckling energy absorbing member (20, 20D-20N, 20Q, 60, 65, 90) is constituted by a member in the form of a plate made of a synthetic resin material and is provided in a substantially horizontal plane along the lengthwise direction of the bumper (4) and through the entire width of the bumper (4) in the front-rear direction.

13. A vehicle impact energy absorbing structure comprising a door inner panel, a door trim (46), and the vehicle impact energy absorbing member according to any one of claims 1 to 7, the vehicle impact energy absorbing member being provided in a space between the door inner panel and the door trim (46).

14. A vehicle impact energy absorbing structure comprising a pillar inner panel, a pillar trim (73), and the vehicle impact energy absorbing member according to any one of claims 1 to 7, the vehicle impact energy absorbing member being provided in a space between the pillar inner panel and the pillar trim (73).

## Patentansprüche

1. Fahrzeugaufprallenergie absorbierendes Bauteil zur Verwendung in einem Stoßfänger (4), einer Seitentür (40) oder einer Säule (70), wobei das Fahrzeugaufprallenergie absorbierende Bauteil aufweist:
ein Kompressionsenergie absorbierendes Bauteil (10, 10A-10C, 50, 55, 80), das durch ein Schaumformstück gebildet ist, das aus einem Kunstharz hergestellt ist, um eine Aufprallenergie mit Hilfe von Kompressionsverformung zu absorbieren; und
ein Knickenergie absorbierendes Bauteil (20, 20D-20N, 20Q, 60, 65, 90), das durch ein massives Bauteil gebildet ist, das aus einem Kunstharzmaterial hergestellt ist, um eine Aufprallenergie mit Hilfe von Knickverformung zu absorbieren, wobei das Knickenergie absorbierende Bauteil einen Knickabschnitt (22, 22F, 22H, 22I, 22K-22N, 22P, 22Q, 62, 67, 92) hat, der die Form einer Platte hat und geknickt und verformt werden kann,
wobei das Kompressionsenergie absorbierende Bauteil einen Öffnungsabschnitt (11, 11A, 11B, 51, 56, 81) hat, der Knickabschnitt des Knickenergie absorbierenden Bauteils die Öffnung mit Knickzugaberäumen (13) auf Gegenseiten des Knickabschnitts durchläuft und ein Spitzenende des Knickabschnitts in der Umgebung einer entsprechenden Komponente aus einer Stoßfängerabdeckung (2), einer Türverkleidung (46) und einer Säulenverkleidung (73) platzierbar ist, wobei die Knickzugaberäume so festgelegt sind, dass es zu keiner gegenseitigen Störung zwischen der Innenwandfläche des Öffnungsabschnitts (11, 11A, 11B, 51, 56, 81) des Kompressionsenergie absorbierenden Bauteils und dem Knickabschnitt kommt, wenn der Knickabschnitt knickt.

2. Fahrzeugaufprallenergie absorbierendes Bauteil nach Anspruch 1,
wobei das Kompressionsenergie absorbierende Bauteil (10, 10A-10C, 50, 55, 80) so angeordnet ist, das es über die gesamte Länge der Zeitperiode der Aufprallenergieabsorption kompressionsverformt wird.

3. Fahrzeugaufprallenergie absorbierendes Bauteil nach Anspruch 1 oder 2,
wobei das Verschäumungsverhältnis des Schaumformstücks, das das Kompressionsenergie absorbierende Bauteil (10, 10A-10C, 50, 55, 80) bildet, auf 2 bis 150 festgelegt ist.

4. Fahrzeugaufprallenergie absorbierendes Bauteil nach einem der Ansprüche 1 bis 3, wobei das Knickenergie absorbierende Bauteil (20, 20D-20N, 20Q, 60, 65, 90) durch ein Schaumformstück gebildet ist, das aus einem Kunstharzmaterial hergestellt ist.

5. Fahrzeugaufprallenergie absorbierendes Bauteil nach Anspruch 4,
wobei das Verschäumungsverhältnis des Schaumformstücks, das das Knickenergie absorbierende Bauteil (20, 20D-20N, 20Q, 60, 65, 90) bildet, auf höchstens 20 festgelegt ist.

6. Fahrzeugaufprallenergie absorbierendes Bauteil nach einem der Ansprüche 1 bis 5, wobei das Knickenergie absorbierende Bauteil (20, 20D-20N, 20Q, 60, 65, 90) in einem Stück mit dem Kompressionsenergie absorbierenden Bauteil (10, 10A-10C, 50, 55, 80) durch Einsatzformen ausgebildet ist.

7. Fahrzeugaufprallenergie absorbierendes Bauteil nach einem der Ansprüche 1 bis 6, wobei das Knickenergie absorbierende Bauteil (20, 20D-20N, 20Q, 60, 65, 90) und das Kompressionsenergie absorbierende Bauteil (10, 10A-10C, 50, 55, 80) getrennt ausgebildet und in einem Stück miteinander kombiniert sind.

8. Fahrzeugaufprallenergie absorbierende Struktur mit einem Stoßfänger-Verstärkungsbauteil (1), das in einem vorderen Endabschnitt eines Fahrzeugs in Fahrzeugbreitenrichtung vorgesehen ist, einer Stoßfängerabdeckung (2), die das Stoßfänger-Verstärkungsbauteil (1) abdeckt, und dem Fahrzeugaufprallenergie absorbierenden Bauteil nach einem der Ansprüche 1 bis 7,
wobei das Fahrzeugaufprallenergie absorbierende Bauteil in einem Raum zwischen dem Stoßfänger-Verstärkungsbauteil (1) und der Stoßfängerabdeckung (2) vorgesehen ist.

9. Fahrzeugaufprallenergie absorbierende Struktur nach Anspruch 8,
wobei das Knickenergie absorbierende Bauteil (20, 20D-20N, 20Q, 60, 65, 90) einstückig mit der Stoßfängerabdeckung (2) vorgesehen ist und ein Anordnungsraum zum Unterbringen des Knickenergie absorbierenden Bauteils (20, 20D-20N, 20Q, 60, 65, 90) im Kompressionsenergie absorbierenden Bauteil (10, 10A-10C, 50, 55, 80) gebildet ist.

10. Fahrzeugstoßfänger mit dem Fahrzeugaufprallenergie absorbierenden Bauteil nach einem der Ansprüche 1 bis 7,
wobei das Fahrzeugaufprallenergie absorbierende Bauteil ein Kernbauteil eines Fahrzeugstoßfängers (4) ist.

11. Fahrzeugstoßfänger nach Anspruch 10,
wobei das Knickenergie absorbierende Bauteil (20, 20D-20N, 20Q, 60, 65, 90) über die gesamte Breite des Stoßfängers (4) in Vorwärts-Rückwärts-Richtung vorgesehen ist.

12. Fahrzeugstoßfänger nach Anspruch 10 oder 11,
wobei das Knickenergie absorbierende Bauteil (20, 20D-20N, 20Q, 60, 65, 90) durch ein Bauteil in Form einer aus einem Kunstharzmaterial hergestellten Platte gebildet ist und in einer im Wesentlichen horizontalen Ebene in Längsrichtung des Stoßfängers (4) und über die gesamte Breite des Stoßfängers (4) in Vorwärts-Rückwärts-Richtung vorgesehen ist.

13. Fahrzeugaufprallenergie absorbierende Struktur mit einem Türinnenblech, einer Türverkleidung (46) und dem Fahrzeugaufprallenergie absorbierenden Bauteil nach einem der Ansprüche 1 bis 7, wobei das Fahrzeugaufprallenergie absorbierende Bauteil in einem Raum zwischen dem Türinnenblech und der Türverkleidung (46) vorgesehen ist.

14. Fahrzeugaufprallenergie absorbierende Struktur mit einem Säuleninnenblech, einer Säulenverkleidung (73) und dem Fahrzeugaufprallenergie absorbierenden Bauteil nach einem der Ansprüche 1 bis 7, wobei das Fahrzeugaufprallenergie absorbierende Bauteil in einem Raum zwischen dem Säuleninnenblech und der Säulenverkleidung (73) vorgesehen ist.

## Revendications

1. Elément d'absorption d'énergie de choc de véhicule destiné à être utilisé dans un pare-chocs (4), une porte latérale (40) ou un pilier (70), l'élément d'absorption d'énergie de choc de véhicule comprenant :
un élément d'absorption d'énergie de compression (10, 10A-10C, 50, 55, 80) constitué par une pièce moulée en mousse réalisée à partir d'une résine synthétique pour absorber une énergie de choc en utilisant la déformation de compression ; et
un élément d'absorption d'énergie de flambage (20, 20D-20N, 20Q, 60, 65, 90) constitué par un élément solide réalisé à partir d'un matériau en résine synthétique pour absorber une énergie de choc en utilisant la déformation par flambage, l'élément d'absorption d'énergie de flambage ayant une partie de flambage (22, 22F, 22H, 22I, 22K-22N, 22P, 22Q, 62, 67, 92) qui se présente sous forme de plaque et pouvant être flambée et déformée,
dans lequel ledit élément d'absorption d'énergie de compression a une partie d'ouverture (11, 11A, 11B, 51, 56, 81), la partie de flambage de l'élément d'absorption d'énergie de flambage passe par l'ouverture avec des espaces de tolérance de flambage (13) sur les côtés opposés de la partie de flambage, et une extrémité de pointe de la partie de flambage peut être placée à proximité d'un élément correspondant parmi un revêtement de pare-chocs (2), une garniture de porte (46) et une garniture de pilier (73), dans lequel les espaces de tolérance de flambage sont placés de sorte qu'aucune interférence mutuelle ne se produit entre la surface de paroi interne de la partie d'ouverture (11, 11A, 11B, 51, 56, 81) de l'élément d'absorption d'énergie de compression et la partie de flambage lorsque la partie de flambage flambe.

2. Elément d'absorption d'énergie de choc de véhicule selon la revendication 1,
dans lequel l'élément d'absorption d'énergie de compression (10, 10A-10C, 50, 55, 80) est disposé afin d'être déformé par compression sur toute la longueur de la période du temps d'absorption d'énergie de choc.

3. Elément d'absorption d'énergie de choc de véhicule selon la revendication 1 ou 2, dans lequel le rapport de dilatation de moussage de la pièce moulée en mousse formant l'élément d'absorption d'énergie de compression (10, 10A-10C, 50, 55, 80) est de 2 à 150.

4. Elément d'absorption d'énergie de choc de véhicule selon l'une quelconque des revendications 1 à 3,
dans lequel l'élément d'absorption d'énergie de flambage (20, 20D-20N, 20Q, 60, 65, 90) est constitué par une pièce moulée en mousse réalisée à partir d'un matériau en résine synthétique.

5. Elément d'absorption d'énergie de choc de véhicule selon la revendication 4,
dans lequel le rapport de dilatation de moussage de la pièce moulée en mousse formant l'élément d'absorption d'énergie de flambage (20, 20D-20N, 20Q, 60, 65, 90) est de 20 ou moins.

6. Elément d'absorption d'énergie de choc de véhicule selon l'une quelconque des revendications 1 à 5,
dans lequel l'élément d'absorption d'énergie de flambage (20, 20D-20N, 20Q, 60, 65, 90) est formé de manière solidaire avec l'élément d'absorption d'énergie de compression (10, 10A-10C, 50, 55, 80) par moulage par insertion.

7. Elément d'absorption d'énergie de choc de véhicule selon l'une quelconque des revendications 1 à 6,
dans lequel l'élément d'absorption d'énergie de flambage (20, 20D-20N, 20Q, 60, 65, 90) et l'élément d'absorption d'énergie de compression (10, 10A-10C, 50, 55, 80) sont formés séparément et combinés de manière solidaire entre eux.

8. Structure d'absorption d'énergie de choc de véhicule comprenant un élément de renforcement de pare-chocs (1) prévu dans une partie d'extrémité avant d'un véhicule le long du sens de la largeur du véhicule, un revêtement de pare-chocs (2) recouvrant l'élément de renforcement de pare-chocs (1), et l'élément d'absorption d'énergie de choc de véhicule selon l'une quelconque des revendications 1 à 7,
l'élément d'absorption d'énergie de choc de véhicule étant prévu dans un espace entre l'élément de renforcement de pare-chocs (1) et le revêtement de pare-chocs (2).

9. Structure d'absorption d'énergie de choc de véhicule selon la revendication 8,
dans laquelle l'élément d'absorption d'énergie de flambage (20, 20D-20N, 20Q, 60, 65, 90) est prévu de manière solidaire avec le revêtement de pare-chocs (2), et un espace d'assemblage pour loger l'élément d'absorption d'énergie de flambage (20, 20D-20N, 20Q, 60, 65, 90) est formé dans l'élément d'absorption d'énergie de compression (10, 10A-10C, 50, 55, 80).

10. Pare-chocs de véhicule comprenant l'élément d'absorption d'énergie de choc de véhicule selon l'une quelconque des revendications 1 à 7,
dans lequel l'élément d'absorption d'énergie de choc de véhicule est un élément de noyau d'un pare-chocs de véhicule (4).

11. Pare-chocs de véhicule selon la revendication 10,
dans lequel l'élément d'absorption d'énergie de flambage (20, 20D-20N, 20Q, 60, 65, 90) est prévu à travers toute la largeur du pare-chocs (4) dans une direction avant-arrière.

12. Pare-chocs de véhicule selon la revendication 10 ou 11,
dans lequel l'élément d'absorption d'énergie de flambage (20, 20D-20N, 20Q, 60, 65, 90) est constitué par un élément se présentant sous la forme d'une plaque réalisée avec un matériau en résine synthétique et est prévu dans un plan sensiblement horizontal le long du sens de la longueur du pare-chocs (4) et sur toute la largeur du pare-chocs (4) dans une direction avant-arrière.

13. Structure d'absorption d'énergie de choc de véhicule comprenant un panneau interne de porte, une garniture de porte (46) et l'élément d'absorption d'énergie de choc de véhicule selon l'une quelconque des revendications 1 à 7, l'élément d'absorption d'énergie de choc de véhicule étant prévu dans un espace entre le panneau interne de porte et la garniture de porte (46).

14. Structure d'absorption d'énergie de choc de véhicule comprenant un panneau interne de pilier, une garniture de pilier (73) et l'élément d'absorption d'énergie de choc de véhicule selon l'une quelconque des revendications 1 à 7, l'élément d'absorption d'énergie de choc de véhicule étant prévu dans un espace entre le panneau interne de pilier et la garniture de pilier (73).
